(19) Europäisches Patentamt
European Patent Office
Office européen des brevets

(11) EP 4 578 892 A1

(12) EUROPEAN PATENT APPLICATION
published in accordance with Art. 153(4) EPC

(43) Date of publication:
**02.07.2025 Bulletin 2025/27**

(21) Application number: **23857393.5**

(22) Date of filing: **23.08.2023**

(51) International Patent Classification (IPC):
***C08G 73/00*** *(2006.01)* ***B29B 17/02*** *(2006.01)*
***C08G 12/00*** *(2006.01)* ***C08J 5/04*** *(2006.01)*
***C08J 11/10*** *(2006.01)* ***C08J 11/28*** *(2006.01)*
***C08L 79/00*** *(2006.01)*

(52) Cooperative Patent Classification (CPC):
**B29B 17/02; C08G 12/00; C08G 73/00; C08J 5/04; C08J 11/10; C08J 11/28; C08L 79/00;** Y02W 30/62

(86) International application number:
**PCT/JP2023/030385**

(87) International publication number:
**WO 2024/043285 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.08.2022 JP 2022132746**
**23.08.2022 JP 2022132742**

(71) Applicant: **Asahi Kasei Kabushiki Kaisha**
**Tokyo 1000006 (JP)**

(72) Inventors:
- **TOKIMARU, Yuki**
  **Tokyo 100-0006 (JP)**
- **AKIYAMA, Tsutomu**
  **Tokyo 100-0006 (JP)**
- **HAMAMOTO, Ryo**
  **Tokyo 100-0006 (JP)**
- **SUZUKI, Aya**
  **Tokyo 100-0006 (JP)**
- **YONEMURA, Masami**
  **Tokyo 100-0006 (JP)**

(74) Representative: **D Young & Co LLP**
**3 Noble Street**
**London EC2V 7BQ (GB)**

# (54) RESIN COMPOSITION, COMPOSITE REINFORCING MATERIAL, MOLDED BODY, AND METHOD FOR RECOVERING REINFORCING FIBERS FROM COMPOSITE REINFORCING MATERIAL

(57) A resin composition contains a resin that includes a monomer unit derived from (A) an acetoacetic acid ester compound including two or more acetoacetic acid ester groups in a molecule and a monomer unit derived from (B) an amine compound including two or more primary amino groups in a molecule, and that has a three-dimensional crosslinked structure in which an acetoacetic acid ester group of the (A) acetoacetic acid ester compound and a primary amino group of the (B) amine compound are condensation bonded.



Processed by Luminess, 75001 PARIS (FR)

## Description

TECHNICAL FIELD

The present disclosure relates to a resin composition, a reinforced composite material, a shaped product, and a method of recovering reinforcing fiber from a reinforced composite material.

BACKGROUND

Reinforced composite materials are materials that are obtained through compositing and shaping of a reinforcing material such as carbon fiber, glass fiber, metal fiber, organic high-strength fiber, an inorganic filler, a metal filler, carbon nanotubes, or cellulose nanofiber with a resin serving as a base material. Characteristics of reinforced composite materials include high strength and light weight compared to metals such as iron. In order to exploit these characteristics, reinforced composite materials are starting to be used not only in some automobiles, aircraft, and so forth, but also in blades of wind turbines, etc. as materials that significantly contribute to improvement of energy efficiency.

Production of carbon fiber, which is one type of reinforcing material, has more than doubled from 60,000 tons to 140,000 tons over 5 years from 2015 to 2020. In production of carbon fiber, acrylonitrile is first synthesized from petroleum, and then acrylic fiber in which this acrylonitrile is converted to yarns is produced. The acrylic fiber is then subjected to carbonization treatment at a high temperature of thousands of degrees to produce carbon fiber. Although carbon fiber is sometimes used in this form, carbon fiber is typically processed into various forms such as continuous fiber, non-woven fabric, or chopped fiber and is composited with various types of resins in order to be used as carbon fiber-reinforced plastic (CFRP), which is one type of reinforced composite material.

Specific examples of known carbon fiber-reinforced plastics include a carbon fiber-reinforced plastic in which carbon fiber is composited with an epoxy resin that is a thermosetting resin (for example, refer to Patent Literature (PTL) 1) and a carbon fiber-reinforced plastic in which carbon fiber is composited with a polypropylene resin that is a thermoplastic resin (for example, refer to PTL 2).

Moreover, besides the use of thermosetting resins and thermoplastic resins as resins serving as base materials, there has also been increasing interest in the use of resins including dynamic covalent bonds in recent years. A dynamic covalent bond is a covalent bond that can reversibly dissociate and bond through the action of heat (temperature), light, a catalyst, or the like. The introduction of dynamic covalent bonds into a resin enables reversible reorganization of a strong macromolecular structure formed by covalent bonds. Therefore, the introduction of dynamic covalent bonds is anticipated to improve mechanical characteristics, control functionality, impart self-healing ability, and so forth.

For example, PTL 3 discloses a fiber-reinforced resin in which a resin including a dynamic covalent bond that reversibly dissociates and bonds through external stimulus is reinforced by fiber and in which interfacial adhesiveness of the fiber and the resin is increased relative to that conventionally achieved through either or both of a catalyst and a resin curing agent that accelerates dissociation and bonding of the dynamic covalent bond being mounted on the surface of the fiber.

PTL 4 discloses a resin-metal composite in which high joint strength and high ease of disassembly are simultaneously achieved through the inclusion of a metal member and a resin member that is joined to the metal member and that also contains fiber and includes a dynamic covalent bond capable of reversible dissociation and bonding with a functional group present at the surface of the metal member.

Moreover, PTL 5 discloses a fiber-reinforced resin in which the strength of a matrix inclusive of fiber is improved through the inclusion of a resin that includes a covalent bond capable of reversible dissociation and bonding, fiber that reinforces the resin, and a metal oxide that is dispersed in the resin and that accelerates dissociation and bonding of the resin.

CITATION LIST

Patent Literature

PTL 1: JP6156569B2
PTL 2: JP6064564B2
PTL 3: JP2019-26781A
PTL 4: JP2019-25842A
PTL 5: JP2021-80379A

SUMMARY

(Technical Problem)

Expansion of applications and demand for reinforced composite materials has been accompanied by increasing need for recycling.

Although carbon fiber-reinforced plastics have excellent material characteristics such as strength, hardness, and the lack of rusting and decay, the method of disposal of such carbon fiber-reinforced plastics is an issue due to these characteristics. Whereas general plastics can easily be combusted, carbon fiber has a structure with a high degree of graphitization, which makes it difficult to combust. Consequently, off cuts and scraps of carbon fiber-reinforced plastics are pulverized and subsequently disposed of in landfill as industrial waste in Japan. Carbon fiber that has been pulverized and disposed of in landfill does not undergo biodegradation and acts as a cause of oceanic plastic pollution.

For this reason, recycling methods have been proposed in which a reinforcing material is separated and recovered from a reinforced composite material after use and is then reused.

For example, in a case in which the resin in a reinforced composite material is a thermosetting resin, there is a method that involves treating carbon fiber-reinforced plastic at a high temperature of 500°C to 700°C in a low-oxygen state so as to cause thermal decomposition of a resin component serving as a base material and recover just the carbon fiber. A method using superheated steam has also been proposed. Superheated steam is steam having a vapor temperature not lower than the saturation temperature at a certain pressure that is obtained through further superheating of saturated vapor. The method involves using this superheated steam to cause efficient thermal decomposition of a resin component serving as a base material and recover just carbon fiber. However, reduction of strength of the recovered carbon fiber is a concern in these methods because they each involve treatment at high temperature (200°C or higher).

Moreover, for a case in which the resin in a reinforced composite material is a thermoplastic resin, a technique of dissolving the resin component in a prescribed organic solvent has been proposed. Features of this technique are a low treatment temperature of 100°C to 150°C and lack of reduction of the strength of recovered carbon fiber due to the absence of remaining resin since a wet process is adopted, thus making this technique preferable as a fiber recovery method.

However, among resin components of reinforced composite materials, thermosetting resins cannot undergo the recycling described above because they include a three-dimensional crosslinked structure and thus have a structure that resists melting and dissolution, which means that the thermosetting resin and a reinforcing material cannot be separated using low temperature or a solvent. On the other hand, thermoplastic resins can undergo the recycling described above because they are macromolecules, but thermoplastic resins tend to be inferior to thermosetting resins in terms of mechanical characteristics, heat resistance characteristics, and chemical resistance characteristics. With regards to this point, although the use of a resin including dynamic covalent bonds improves mechanical characteristics, etc. as described in the aforementioned Patent Literature, there is room for further improvement in terms of recyclability.

Accordingly, in view of the level of such conventional techniques, the present disclosure addresses a problem of providing a resin composition with which a recyclable reinforced composite material can be obtained, a reinforced composite material containing this resin composition, a shaped product containing this reinforced composite material, and a method of recovering reinforcing fiber from this reinforced composite material.

(Solution to Problem)

As a result of diligent studies conducted with the aim of solving the problem described above, the inventors discovered that the aforementioned object can be achieved through the adoption of a composition that contains a resin having a prescribed three-dimensional crosslinked structure, thus leading to completion of the present disclosure.

Specifically, the present disclosure provides the following.

[1] A resin composition comprising a resin that includes a monomer unit derived from (A) an acetoacetic acid ester compound including two or more acetoacetic acid ester groups in a molecule and a monomer unit derived from (B) an amine compound including two or more primary amino groups in a molecule, and that has a three-dimensional crosslinked structure in which an acetoacetic acid ester group of the (A) acetoacetic acid ester compound and a primary amino group of the (B) amine compound are condensation bonded.

[2] The resin composition according to [1], wherein a difference (Tv - Tg) between a bond exchange temperature (Tv) and a glass-transition temperature (Tg) is 10°C or more.

[3] The resin composition according to [1] or [2], wherein the (A) acetoacetic acid ester compound includes a bisacetoacetic acid ester compound, and the (B) amine compound includes an amine compound including three or more primary amino groups in a molecule.

[4] The resin composition according to [1] or [2], wherein the (A) acetoacetic acid ester compound includes an acetoacetic acid ester compound including three or more acetoacetic acid ester groups in a molecule.

[5] The resin composition according to any one of [1] to [4], wherein crosslink density is 200 $mol/m^3$ to 2,000 $mol/m^3$.
[6] The resin composition according to any one of [1] to [5], wherein aromatic group content is less than 10 mass%.
[7] A reinforced composite material comprising: the resin composition according to any one of [1] to [6]; and reinforcing fiber.
[8] The reinforced composite material according to [7], wherein the reinforcing fiber has a fiber length of 10 mm or more.
[9] The reinforced composite material according to [7] or [8], wherein the reinforcing fiber includes at least one type of sizing agent including an amino group.
[10] The reinforced composite material according to [9], wherein the sizing agent includes one or more selected from the group consisting of a silane coupling agent, an epoxy resin compound, a polyamide resin compound, and a polyurethane resin compound.
[11] The reinforced composite material according to any one of [7] to [10], wherein 0.1 mass% to 5.0 mass% of an additive is contained in 100 mass% of the reinforced composite material.
[12] The reinforced composite material according to any one of [7] to [11], wherein the reinforcing fiber is glass fiber or carbon fiber.
[13] The reinforced composite material according to [12], wherein the carbon fiber has a single fiber fineness of 0.2 dtex to 2.0 dtex.
[14] The reinforced composite material according to [12], wherein the glass fiber has a single fiber fineness of 1.0 dtex to 10 dtex.
[15] The reinforced composite material according to any one of [7] to [14], wherein the reinforcing fiber is continuous reinforcing fiber.
[16] A shaped product comprising the reinforced composite material according to any one of [7] to [15].
[17] A method of recovering reinforcing fiber from a reinforced composite material containing a resin composition that contains a resin including a dynamic covalent bond that reversibly dissociates and bonds through external stimulus and reinforcing fiber that has a fiber length of 10 mm or more, the method comprising:

immersing the reinforced composite material in a decomposition solution to cause decomposition of the resin; and
recovering the reinforcing fiber from the decomposition solution after the decomposition.

[18] The method according to [17], comprising processing the reinforced composite material by cutting and deformation prior to immersion of the reinforced composite material in the decomposition solution.

(Advantageous Effect)

According to the present disclosure, it is possible to provide a resin composition with which a recyclable reinforced composite material can be obtained, a reinforced composite material containing this resin composition, a shaped product containing this reinforced composite material, and a method of recovering reinforcing fiber from this reinforced composite material.

## DETAILED DESCRIPTION

The following provides a detailed description of an embodiment of the present disclosure (hereinafter, referred to as the "present embodiment"). The present embodiment described below is an illustrative example for describing the present disclosure and is not intended to limit the present disclosure to the following matter.

<Resin composition>

A resin composition of the present embodiment contains a resin that includes a monomer unit derived from (A) an acetoacetic acid ester compound including two or more acetoacetic acid ester groups in a molecule and a monomer unit derived from (B) an amine compound including two or more primary amino groups in a molecule, and that has a three-dimensional crosslinked structure in which an acetoacetic acid ester group of the (A) acetoacetic acid ester compound and a primary amino group of the (B) amine compound are condensation bonded.

As a result of the resin composition of the present embodiment containing a resin that has the three-dimensional crosslinked structure set forth above, it is possible to obtain a reinforced composite material that has adequate mechanical characteristics, heat resistance characteristics, and chemical resistance characteristics while also being recyclable by using the resin composition of the present embodiment.

[Resin]

The resin of the present embodiment includes a monomer unit derived from (A) an acetoacetic acid ester compound including two or more acetoacetic acid ester groups in a molecule.

The (A) acetoacetic acid ester compound may be an acetoacetic acid ester compound including two acetoacetic acid ester groups in a molecule (i.e., a bisacetoacetic acid ester compound) or may be an acetoacetic acid ester compound including three or more acetoacetic acid ester groups in a molecule.

The (A) acetoacetic acid ester compound may be one type of compound used individually or may be two or more types of compounds used together.

The bisacetoacetic acid ester compound is an ester of a polyol such as a diol or a triol with two acetoacetic acid molecules.

Examples of the bisacetoacetic acid ester compound include, but are not specifically limited to, alkanediol bisacetoacetic acid esters such as ethylene glycol-1,2-bisacetoacetic acid ester, propanediol-1,3-bisacetoacetic acid ester, propanediol-1,2-bisacetoacetic acid ester, butanediol-1,4-bisacetoacetic acid ester, hexanediol-1,6-bisacetoacetic acid ester, and decanediol-1,10-bisacetoacetic acid ester; oxyalkylenediol bisacetoacetic acid esters such as diethylene glycol bisacetoacetic acid ester, triethylene glycol bisacetoacetic acid ester, polyethylene glycol bisacetoacetic acid ester, and polypropylene glycol bisacetoacetic acid ester; and 1,4-cyclohexanedimethanol bisacetoacetic acid ester.

Of these examples, oxyalkylenediol bisacetoacetic acid esters such as polypropylene glycol bisacetoacetic acid ester, in particular, are preferable from a viewpoint of high mechanical characteristics and good self-healing ability.

One of the above-described bisacetoacetic acid ester compounds may be used individually, or two or more of the above-described bisacetoacetic acid ester compounds may be used together.

The acetoacetic acid ester compound including three or more acetoacetic acid ester groups in a molecule is an ester of a polyol such as a triol with three or more acetoacetic acid molecules.

Examples of the acetoacetic acid ester compound including three or more acetoacetic acid ester groups in a molecule include, but are not specifically limited to, polyacetoacetic acid esters such as trisacetoacetic acid esters and tetrakisacetoacetic acid esters.

Examples of trisacetoacetic acid esters include, but are not specifically limited to, trimethylolpropane trisacetoacetate, 1,2,3-propanetriol trisacetoacetate, 1,2,4-butanetriol trisacetoacetate, and 1,2,6-hexanetriol trisacetoacetate.

Examples of other polyacetoacetic acid esters include, but are not specifically limited, pentaerythritol tetrakisacetoacetic acid ester and like, and also polyacetoacetic acid esters that can be obtained by a method described in JP2017-533088A.

Of these examples, 1,2,3-propanetriol, in particular, is preferable from a viewpoint of high mechanical characteristics and good self-healing ability.

One of the above-described acetoacetic acid ester compounds including three or more acetoacetic acid ester groups in a molecule may be used individually, or two or more of the above-described acetoacetic acid ester compounds including three or more acetoacetic acid ester groups in a molecule may be used together.

The acetoacetic acid ester group content of monomer units derived from the (A) acetoacetic acid ester compound including two or more acetoacetic acid ester groups in a molecule is preferably 70 mol% to 110 mol%, and more preferably 90 mol% to 100 mol% relative to the primary amino group content of monomer units derived from the (B) amine compound. When the acetoacetic acid ester group content is within any of the ranges set forth above, the density of a three-dimensional crosslinked structure formed through a condensation reaction of an acetoacetic acid ester group of the (A) acetoacetic acid ester compound and a primary amino group of the (B) amine compound tends to be suitably adjusted, and high mechanical properties and good fluidity tend to be obtained.

In particular, when monomer units derived from an acetoacetic acid ester compound including three or more acetoacetic acid ester groups in a molecule are included within any of the ranges set forth above, this tends to result in a resin composition that does not readily cause shaping defects and experiences little dimensional change of shape. Moreover, in the case of a composition such as set forth above, the composition has a slow rate of viscosity reduction in a certain temperature region. Therefore, when a reinforced composite material is cut to an appropriate size in a certain temperature region, the reinforced composite material can easily be cut with little likelihood of separation of resin and fiber occurring.

In a case in which the (A) acetoacetic acid ester compound includes a bisacetoacetic acid ester compound, monomer units derived from the bisacetoacetic acid ester compound are preferably 37 mol% to 77 mol%, more preferably 47 mol% to 67 mol%, and even more preferably 52 mol% to 62 mol% when the total amount of the resin is taken to be 100 mol%. When the content of monomer units derived from the bisacetoacetic acid ester compound is within any of the ranges set forth above, the density of a three-dimensional crosslinked structure formed through a condensation reaction of an acetoacetic acid ester group of the bisacetoacetic acid ester compound and a primary amino group of the (B) amine compound tends to be suitably adjusted, and high mechanical properties and good fluidity tend to be obtained.

In a case in which the (A) acetoacetic acid ester compound includes an acetoacetic acid ester compound

including three or more acetoacetic acid ester groups in a molecule, monomer units derived from the acetoacetic acid ester compound including three or more acetoacetic acid ester groups in a molecule are preferably 17 mol% to 57 mol%, more preferably 27 mol% to 47 mol%, and even more preferably 32 mol% to 42 mol% when the total amount of the resin is taken to be 100 mol%. When the content of monomer units derived from the acetoacetic acid ester compound including three or more acetoacetic acid ester groups in a molecule is within any of the ranges set forth above, the density of a three-dimensional crosslinked structure formed through a condensation reaction of an acetoacetic acid ester group of the acetoacetic acid ester compound including three or more acetoacetic acid ester groups in a molecule and a primary amino group of the (B) amine compound tends to be suitably adjusted, and high mechanical properties and good fluidity tend to be obtained.

The resin of the present embodiment includes a monomer unit derived from (B) an amine compound including two or more primary amino groups in a molecule.

The (B) amine compound including two or more primary amino groups in a molecule is a compound that includes two or more $-NH_2$ groups in a molecule.

The (B) amine compound including two or more primary amino groups in a molecule may be a diamine, a triamine, or a polyamine, and may be an aromatic amine, may be an aliphatic amine, or may be a compound including both an aliphatic amino group and an aromatic amino group.

The (B) amine compound including two or more primary amino groups in a molecule may be one type of compound used individually or may be two or more types of compounds used together.

Examples of aromatic diamines include o-phenylenediamine, m-phenylenediamine, p-phenylenediamine, 2,4-diaminotoluene, 2,5-diaminotoluene, 3,5-diaminotoluene, 1,4-diamino-2-methoxybenzene, 2,5-diamino-p-xylene, 1,3-diamino-4-chlorobenzene, 3,5-diaminobenzoic acid, 1,4-diamino-2,5-dichlorobenzene, 4,4'-diamino-1,2-diphenylethane, 4,4'-diamino-2,2'-dimethylbibenzyl, 4,4'-diaminodiphenylmethane, 3,3'-diaminodiphenylmethane, 3,4'-diaminodiphenylmethane, 4,4'-diamino-3,3'-dimethyldiphenylmethane, 2,2'-diaminostilbene, 4,4'-diaminostilbene, 4,4'-diaminodiphenyl ether, 3,4'-diaminodiphenyl ether, 4,4'-diaminodiphenyl sulfide, 4,4'-diaminodiphenyl sulfone, 3,3'-diaminodiphenyl sulfone, 4,4'-diaminobenzophenone, 1,3-bis(3-aminophenoxy)benzene, 1,3-bis(4-aminophenoxy)benzene, 1,4-bis(4-aminophenoxy)benzene, 3,5-bis(4-aminophenoxy)benzoic acid, 4,4'-bis(4-aminophenoxy)bibenzyl, 2,2-bis[(4-aminophenoxy)methyl]propane, 2,2-bis[4-(4-aminophenoxy)phenyl]hexafluoropropane, 2,2-bis[4-(4-aminophenoxy)phenyl]propane, bis[4-(3-aminophenoxy)phenyl] sulfone, bis[4-(4-aminophenoxy)phenyl] sulfone, 1,1-bis(4-aminophenyl)cyclohexane, $\alpha,\alpha'$-bis(4-aminophenyl)-1,4-diisopropylbenzene, 9,9-bis(4-aminophenyl)fluorene, 2,2-bis(3-aminophenyl)hexafluoropropane, 2,2-bis(4-aminophenyl)hexafluoropropane, 4,4'-diaminodiphenylamine, 2,4-diaminodiphenylamine, 1,8-diaminonaphthalene, 1,5-diaminonaphthalene, 1,5-diaminoanthraquinone, 1,3-diaminopyrene, 1,6-diaminopyrene, 1,8-diaminopyrene, 2,7-diaminofluorene, 1,3-bis(4-aminophenyl)tetramethyldisiloxane, benzidine, 2,2'-dimethylbenzidine, 1,2-bis(4-aminophenyl)ethane, 1,3-bis(4-aminophenyl)propane, 1,4-bis(4-aminophenyl)butane, 1,5-bis(4-aminophenyl)pentane, 1,6-bis(4-aminophenyl)hexane, 1,7-bis(4-aminophenyl)heptane, 1,8-bis(4-aminophenyl)octane, 1,9-bis(4-aminophenyl)nonane, 1,10-bis(4-aminophenyl)decane, 1,3-bis(4-aminophenoxy)propane, 1,4-bis(4-aminophenoxy)butane, 1,5-bis(4-aminophenoxy)pentane, 1,6-bis(4-aminophenoxy)hexane, 1,7-bis(4-aminophenoxy)heptane, 1,8-bis(4-aminophenoxy)octane, 1,9-bis(4-aminophenoxy)nonane, 1,10-bis(4-aminophenoxy)decane, di(4-aminophenyl)propane-1,3-dioate, di(4-aminophenyl)butane-1,4-dioate, di(4-aminophenyl)pentane-1,5-dioate, di(4-aminophenyl)hexane-1,6-dioate, di(4-aminophenyl)heptane-1,7-dioate, di(4-aminophenyl)octane-1,8-dioate, di(4-aminophenyl)nonane-1,9-dioate, di(4-aminophenyl)decane-1,10-dioate, 1,3-bis[4-(4-aminophenoxy)phenoxy]propane, 1,4-bis[4-(4-aminophenoxy)phenoxy]butane, 1,5-bis[4-(4-aminophenoxy)phenoxy]pentane, 1,6-bis[4-(4-aminophenoxy)phenoxy]hexane, 1,7-bis[4-(4-aminophenoxy)phenoxy]heptane, 1,8-bis[4-(4-aminophenoxy)phenoxy]octane, 1,9-bis[4-(4-aminophenoxy)phenoxy]nonane, and 1,10-bis[4-(4-aminophenoxy)phenoxy]decane.

Examples of aromatic-aliphatic diamines include 3-aminobenzylamine, 4-aminobenzylamine, 3-amino-N-methylbenzylamine, 4-amino-N-methylbenzylamine, 3-aminophenethylamine, 4-aminophenethylamine, 3-amino-N-methylphenethylamine, 4-amino-N-methylphenethylamine, 3-(3-aminopropyl)aniline, 4-(3-aminopropyl)aniline, 3-(3-methylaminopropyl)aniline, 4-(3-methylaminopropyl)aniline, 3-(4-aminobutyl)aniline, 4-(4-aminobutyl)aniline, 3-(4-methylaminobutyl)aniline, 4-(4-methylaminobutyl)aniline, 3-(5-aminopentyl)aniline, 4-(5-aminopentyl)aniline, 3-(5-methylaminopentyl)aniline, 4-(5-methylaminopentyl)aniline, 2-(6-aminonaphthyl)methylamine, 3-(6-aminonaphthyl)methylamine, 2-(6-aminonaphthyl)ethylamine, and 3-(6-aminonaphthyl)ethylamine.

Examples of heterocyclic diamines include 2,6-diaminopyridine, 2,4-diaminopyridine, 2,4-diamino-1,3,5-triazine, 2,7-diaminodibenzofuran, 3,6-diaminocarbazole, 2,4-diamino-6-isopropyl-1,3,5-triazine, and 2,5-bis(4-aminophenyl)-1,3,4-oxadiazole.

Examples of aliphatic diamines include 1,2-diaminoethane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,3-diamino-2,2-dimethylpropane, 1,6-diamino-2,5-dimethylhexane, 1,7-diamino-2,5-dimethylheptane, 1,7-diamino-4,4-dimethylheptane, 1,7-diamino-3-methylheptane, 1,9-diamino-5-methylheptane, 1,12-diaminododecane, 1,18-diaminooctadecane, and 1,2-bis(3-aminopropoxy)ethane.

Examples of alicyclic diamines include 1,4-diaminocyclohexane, 1,3-diaminocyclohexane, 4,4'-diaminodicyclohexylmethane, 4,4'-diamino-3,3'-dimethyldicyclohexylamine, and isophorone diamine.

Of these aliphatic diamines, aliphatic diamines having an amino group positioned at the end of a molecular chain are preferable from a viewpoint of improving reactivity.

Of such aliphatic diamines, 1,6-diaminohexane, in particular, is preferable from a viewpoint of high mechanical characteristics and good fluidity.

One of the above-described diamine compounds may be used individually, or two or more of the above-described diamine compounds may be used together.

Specific examples of aromatic triamines include 1,3,5-triaminobenzene, tris(3-aminophenyl)amine, tris(4-aminophenyl)amine, tris(3-aminophenyl)benzene, tris(4-aminophenyl)benzene, 1,3,5-tris(3-aminophenoxy)benzene, 1,3,5-tris(4-aminophenoxy)benzene [TAPOB], 1,3,5-tris(aminophenyl)benzene [TAPB], and 1,3,5-tris(4-aminophenoxy)triazine.

Moreover, aromatic triamines having a specific asymmetric structure represented by the following general formula (1) can also be used.

[Chem. 1]

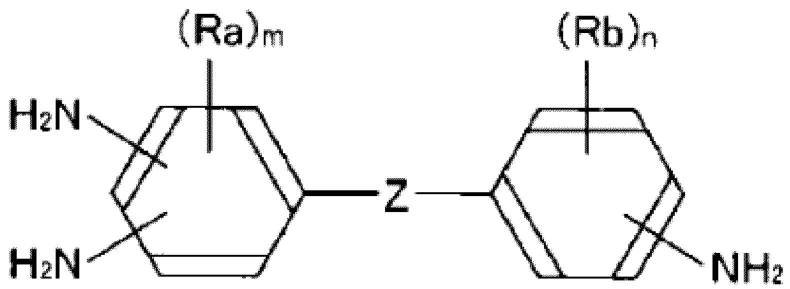

・・・(1)

(In the formula, -Z- is -O-, -CO-, -S-, $-SO_2-$, $-CH_2-$, $-C(CH_3)_2-$, $-C(CF_3)_2-$, or a single bond, Ra and Rb are each independently a hydrogen atom, a halogen atom, a hydroxy group, or a hydrocarbon group, m is an integer of 0 to 3, and n is an integer of 0 to 4.)

Specific examples of aromatic triamines having the specific asymmetric structure represented by general formula (1) include 2,3',4-triaminobiphenyl, 2,4,4'-triaminobiphenyl, 3,3',4-triaminobiphenyl, 3,3',5-triaminobiphenyl, 3,4,4'-triaminobiphenyl, 3,4',5-triaminobiphenyl, 2,3',4-triaminodiphenyl ether, 2,4,4'-triaminodiphenyl ether, 3,3',4-triaminodiphenyl ether, 3,3',5-triaminodiphenyl ether, 3,4,4'-triaminodiphenyl ether, 3,4',5-triaminodiphenyl ether, 2,3',4-triaminobenzophenone, 2,4,4'-triaminobenzophenone, 3,3',4-triaminobenzophenone, 3,3',5-triaminobenzophenone, 3,4,4'-triaminobenzophenone, 3,4',5-triaminobenzophenone, 2,3',4-triaminodiphenyl sulfide, 2,4,4'-triaminodiphenyl sulfide, 3,3',4-triaminodiphenyl sulfide, 3,3',5-triaminodiphenyl sulfide, 3,4,4'-triaminodiphenyl sulfide, 3,4',5-triaminodiphenyl sulfide, 2,3',4-triaminodiphenyl sulfone, 2,4,4'-triaminodiphenyl sulfone, 3,3',4-triaminodiphenyl sulfone, 3,3',5-triaminodiphenyl sulfone, 3,4,4'-triaminodiphenyl sulfone, 3,4',5-triaminodiphenyl sulfone, 2,3',4-triaminodiphenylmethane, 2,4,4'-triaminodiphenylmethane, 3,3',4-triaminodiphenylmethane, 3,3',5-triaminodiphenylmethane, 3,4,4'-triaminodiphenylmethane, 3,4',5-triaminodiphenylmethane, 2-(2,4-diaminophenyl)-2-(3-aminophenyl)propane, 2-(2,4-diaminophenyl)-2-(4-aminophenyl)propane, 2-(3,4-diaminophenyl)-2-(3-aminophenyl)propane, 2-(3,5-diaminophenyl)-2-(3-aminophenyl)propane, 2-(3,4-diaminophenyl)-2-(4-aminophenyl)propane, 2-(3,5-diaminophenyl)-2-(4-aminophenyl)propane, 2-(2,4-diaminophenyl)-2-(3-aminophenyl)hexafluoropropane, 2-(2,4-diaminophenyl)-2-(4-aminophenyl)hexafluoropropane, 2-(3,4-diaminophenyl)-2-(3-aminophenyl)hexafluoropropane, 2-(3,5-diaminophenyl)-2-(3-aminophenyl)hexafluoropropane, 2-(3,4-diaminophenyl)-2-(4-aminophenyl)hexafluoropropane, and 2-(3,5-diaminophenyl)-2-(4-aminophenyl)hexafluoropropane.

Of the above-described aromatic triamines, aromatic triamines having a molecular structure that displays a symmetric shape are preferable.

Examples of aliphatic triamines include, but are not specifically limited to, 1,2,3-triaminopropane, 1,3,5-triaminocyclohexane, and tris(2-aminoethyl)amine.

Specific examples of amine compounds including both an aliphatic amino group and an aromatic amino group include 5-(2-aminoethyl)benzene-1,3-diamine and 2-((4-aminophenoxy)methyl)propane-1,3-diamine.

A commercially available product can be used as an amine compound including three or more primary amino groups in a molecule. For example, JEFFAMINE T-403, JEFFAMINE T-3000, JEFFAMINE T-5000, etc. produced by Huntsman Corporation, POLYMENT NK-350 produced by Nippon Shokubai Co., Ltd., or Hexatran 110 produced by

Ascend Performance Materials may be used.

Moreover, an amino group-modified product of a polysiloxane or the like can also be used as an amine compound including three or more primary amino groups in a molecule. For example, X-22-3939A produced by Shin-Etsu Silicone may be used.

An amine compound that does not include a secondary amino group or a tertiary amino group in a molecule is preferable as an amine compound including three or more primary amino groups in a molecule.

Of these examples, Hexatran 110 produced by Ascend Performance Materials, in particular, is preferable from a viewpoint of high mechanical characteristics and good fluidity.

One of the above-described amine compounds including three or more primary amino groups in a molecule may be used individually, or two or more of the above-described amine compounds including three or more primary amino groups in a molecule may be used together.

The primary amino group content of monomer units derived from the (B) amine compound including two or more primary amino groups in a molecule is preferably 90 mol% to 130 mol%, and more preferably 100 mol% to 110 mol% relative to the acetoacetic acid ester group content of monomer units derived from the (A) acetoacetic acid ester compound. When the primary amino group content is within any of the ranges set forth above, the density of a three-dimensional crosslinked structure formed through a condensation reaction of an acetoacetic acid ester group of the (A) acetoacetic acid ester compound and a primary amino group of the (B) amine compound tends to be suitably adjusted, and high mechanical properties and good fluidity tend to be obtained.

In a case in which the (A) acetoacetic acid ester compound includes a bisacetoacetic acid ester compound, monomer units derived from the (B) amine compound are preferably 23 mol% to 63 mol%, more preferably 33 mol% to 53 mol%, and even more preferably 38 mol% to 48 mol% when the total amount of the resin is taken to be 100 mol%. When the content of monomer units derived from the (B) amine compound is within any of the ranges set forth above, the density of a three-dimensional crosslinked structure formed through a condensation reaction of an acetoacetic acid ester group of the (A) acetoacetic acid ester compound and a primary amino group of the (B) amine compound tends to be suitably adjusted, and high mechanical properties and good fluidity tend to be obtained.

In a case in which the (A) acetoacetic acid ester compound includes an acetoacetic acid ester compound including three or more acetoacetic acid ester groups in a molecule, monomer units derived from the (B) amine compound are preferably 43 mol% to 83 mol%, more preferably 53 mol% to 73 mol%, and even more preferably 58 mol% to 68 mol% when the total amount of the resin is taken to be 100 mol%. When the content of monomer units derived from the (B) amine compound is within any of the ranges set forth above, the density of a three-dimensional crosslinked structure formed through a condensation reaction of an acetoacetic acid ester group of the (A) acetoacetic acid ester compound and a primary amino group of the (B) amine compound tends to be suitably adjusted, and high mechanical properties and good fluidity tend to be obtained.

The resin of the present embodiment has a monomer unit that is derived from the (B) amine compound including two or more primary amino groups in a molecule as an essential constitutional unit, but may also include a monomer unit that is derived from a monoamine to an extent not contrary to the object of the present disclosure.

Examples of the monoamine include n-butylamine and benzylamine.

The resin of the present embodiment is three-dimensionally crosslinked through an acetoacetic acid ester group of the (A) acetoacetic acid ester compound and a primary amino group of the (B) amine compound undergoing a condensation reaction to form a vinylogous urethane bond.

A vinylogous urethane bond is a dynamic covalent bond that is capable of reversible dissociation and bonding through external stimulus such as heat (temperature), light, or a catalyst (hereinafter, also referred to simply as a "dynamic covalent bond"). Among resins that include dynamic covalent bonds, those that include vinylogous urethane bonds are preferable from a viewpoint of maintaining mechanical strength (for example, a value of bending strength) of a reinforced composite material while also having a short resin decomposition time. Such resins are also more preferable because a recycling reaction proceeds even without a catalyst, which means that there is no need to worry about the effort of uniformly dispersing a catalyst during compositing of the resin with fiber, bleed-out of the catalyst over time, and so forth.

Examples of reactions of vinylogous urethanes include not only formation of a vinylogous urethane bond, but also amine exchange and hydrolysis as illustrated below. Reversible dissociation and bonding is possible through this vinylogous urethane bond formation, amine exchange reaction, and hydrolysis reaction. Note that in the following reaction formulae, $R_1$, $R_2$, and $R_3$ each independently represent any chemical structure.

[Chem. 2]

Vinylogous urethane formation

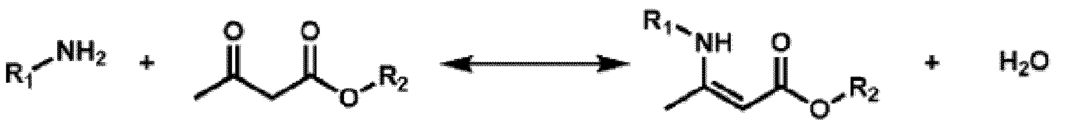

Amine exchange

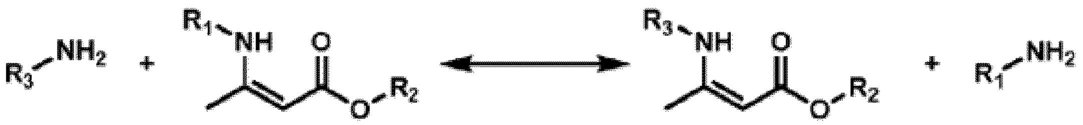

Vinylogous urethane hydrolysis

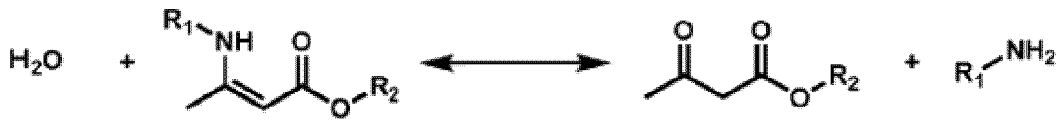

Since vinylogous urethane bonds form a strong three-dimensional crosslinked structure (macromolecular network structure), the resin of the present embodiment has good mechanical characteristics, heat resistance characteristics, and chemical resistance characteristics.

Moreover, since the macromolecular network structure can be returned to monomers and chain-shaped low-molecular weight derivatives through the vinylogous urethane undergoing hydrolysis or an amine exchange reaction with a monofunctional primary amine, a reinforced composite material that is recyclable can be obtained by using the resin composition containing the resin of the present embodiment.

A catalyst may be added to the resin of the present embodiment as necessary with the aim of accelerating the amine exchange reaction, reducing resin viscosity, increasing self-healing ability, and so forth.

Examples of the catalyst include sulfuric acid, paratoluenesulfonic acid, paratoluenesulfonic acid monohydrate, ethylphosphinic acid, phenylphosphinic acid, ethylphosphonic acid, phenylphosphonic acid, zinc(II) chloride, zinc(II) acetate, iron(II) chloride, iron(III) chloride, diethylamine, diisopropylamine, triethylamine, tributylamine, 1,8-diazabicyclo[5.4.0]-7-undecene, 1,5-diazabicyclo[4.3.0]non-5-ene, 1,5,7-triazabicyclo[4.4.0]dec-5-ene, ammonium chloride, ammonium acetate, and ammonium carbamate.

The additive amount of the catalyst is preferably 0.1 mass% to 6 mass%, more preferably 0.1 mass% to 5 mass%, and even more preferably 0.1 mass% to 3 mass% relative to the total amount of the resin. When the additive amount of the catalyst is within any of the ranges set forth above, the amine exchange reaction tends to be suitably adjusted, and high mechanical properties and good self-healing ability tend to be obtained.

From a viewpoint of recyclability, the content of the resin in the resin composition when the resin composition (all solid content when the resin composition is in the form of a varnish) is taken to be 100 mass% is preferably 40 mass% or more, more preferably 60 mass% or more, even more preferably 80 mass% or more, further preferably 95 mass% or more, particularly preferably 97 mass% or more, and most preferably 99 mass% or more.

The resin of the present embodiment can be produced by dissolving the (A) acetoacetic acid ester compound, the

(B) amine compound, and other optional monomers to an extent not contrary to the object of the present disclosure in an organic solvent (for example, methanol, ethanol, or acetone), and subsequently performing mixing and stirring thereof.

With regards to resins including dynamic covalent bonds that are capable of reversible dissociation and bonding through external stimulus, examples of bonds that form a dynamic covalent bond other than a vinylogous urethane bond (VU bond) include an ester bond, an imine bond, a carbonate bond, a cyclic acetal bond, a quaternary ammonium salt bond, an oxazoline bond, a spiro orthoester bond, a boric acid ester bond, and a disulfide bond. The resin may include a dynamic covalent bond in a main chain or may include a dynamic covalent bond in a side chain. In other words, a reactive group or bond that forms a dynamic covalent bond may be positioned in a main chain of a macromolecule or may be positioned in a side chain of a macromolecule as a substituent or the like.

The ester bond is a bond that is obtained by producing a resin through curing of a monomer that forms an ester bond during curing and other optional monomers and that is capable of reversible dissociation and bonding through reaction conditions such as catalyst, acid-base, and temperature, an ester exchange reaction, etc., for example.

The imine bond is a bond that is obtained through a condensation reaction of a carbonyl group of an aldehyde compound or a ketone compound with a primary amino group of an amine compound and that is capable of reversible dissociation and bonding through an imine-amine exchange reaction or the like, for example.

The carbonate bond is a bond that is obtained by producing a resin through ring-opening polymerization of a bis(cyclic carbonate) compound in the presence of a polyol and other optional monomers and that is capable of reversible dissociation and bonding through a carbonate exchange reaction or the like, for example.

The cyclic acetal bond is a bond that is obtained from a carbonyl group and a diol compound, for example. The cyclic acetal bond is capable of reversible dissociation and bonding through reaction conditions such as acid catalyst conditions and temperature.

The quaternary ammonium salt bond is a bond that is obtained through tertiary amine crosslinking by alkylation and that is capable of reversible dissociation and bonding through a thermal equilibrium relationship of the crosslinking, for example.

The oxazoline bond is a bond that is obtained through 4,4-dimethyl-2-oxazolin-5-one crosslinking through a bisphenol and that is capable of reversible dissociation and bonding through a thermal equilibrium relationship of the crosslinking, for example.

The spiro orthoester bond is a bond that is obtained through spiro orthoester crosslinking and that is capable of reversible dissociation and bonding through reaction conditions such as solvent and temperature, for example.

The boric acid ester bond is a bond that is obtained through crosslinking of phenylboric acid and a diol and that is capable of reversible dissociation and bonding through reaction conditions such as pH, acid-base, and temperature, for example.

The disulfide bond is capable of reversible dissociation and bonding through conditions of a redox reaction with a thiol, for example.

(Resin including ester bond)

A resin that includes an ester bond as a dynamic covalent bond tends to result in a reinforced composite material having high mechanical strength.

A reversible reaction of the ester bond may be an ester exchange reaction illustrated below, for example. Note that in the following reaction formula, $R_4$, $R_5$, and $R_6$ each independently represent any chemical structure.

[Chem. 3]

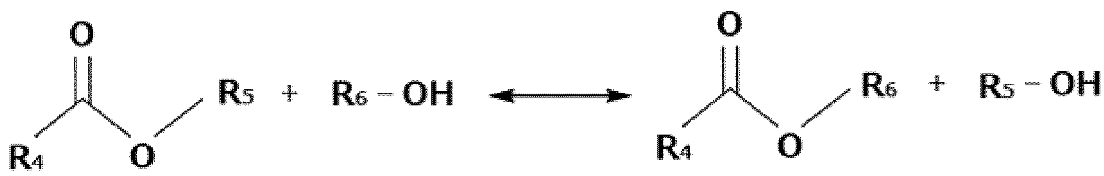

A reinforced composite material that contains a resin including an ester bond as a dynamic covalent bond can be recycled because a macromolecular network structure can be returned to monomers and chain-shaped low-molecular weight derivatives through bond dissociation by an ester exchange reaction.

The resin including an ester bond as a dynamic covalent bond may be an epoxy resin obtained by reacting a polyfunctional epoxy compound, other optional monomers to an extent not contrary to the object of the present disclosure, and a curing agent.

The polyfunctional epoxy compound may be a glycidyl ether-type epoxy compound, a glycidyl ester-type epoxy

compound, a glycidyl amine-type epoxy compound, an alicyclic-type epoxy compound, a prepolymer obtained through polymerization of any of these compounds, or the like, for example. A glycidyl ether-type epoxy resin, a glycidyl ester-type epoxy resin, a glycidyl amine-type epoxy resin, an alicyclic-type epoxy resin, or the like can be used with an appropriate degree of polymerization as a prepolymer.

One polyfunctional epoxy compound may be used individually, or two or more polyfunctional epoxy compounds may be used together.

Examples of glycidyl ether-type epoxy compounds include bisphenol A diglycidyl ether, bisphenol AD diglycidyl ether, bisphenol F diglycidyl ether, bisphenol S diglycidyl ether, hydroquinone diglycidyl ether, resorcinol diglycidyl ether, biphenol diglycidyl ether, hexahydrobisphenol A diglycidyl ether, hexahydrobisphenol AD diglycidyl ether, hexahydrobisphenol F diglycidyl ether, hexahydrobisphenol S diglycidyl ether, propanediol diglycidyl ether, butanediol diglycidyl ether, hexanediol diglycidyl ether, cyclohexanedimethanol diglycidyl ether, cyclohexanediol diglycidyl ether, polyethylene glycol diglycidyl ether, polypropylene glycol diglycidyl ether, neopentyl glycol diglycidyl ether, tetrabromobisphenol A diglycidyl ether, bisphenol hexafluoroacetone diglycidyl ether, biphenyl diglycidyl ether, dihydroxynaphthalene diglycidyl ether, cresol novolac glycidyl ether, xylylene novolac glycidyl ether, bisphenol A novolac glycidyl ether, bisphenol F novolac diglycidyl ether, bisphenol S novolac diglycidyl ether, triphenylmethane novolac glycidyl ether, biphenyl novolac glycidyl ether, terpene phenol novolac glycidyl ether, and derivatives of the preceding examples.

Examples of glycidyl ester-type epoxy compounds include diglycidyl phthalate, diglycidyl isophthalate, diglycidyl terephthalate, diglycidyl tetrahydrophthalate, diglycidyl hexahydrophthalate, triglycidyl benzene-tricarboxylate, tetraglycidyl benezene-tetracarboxylate, glycidyl trimellitate, glycidyl pyromellitate, and derivatives such as anhydrides of the preceding examples.

Examples of glycidyl amine-type epoxy compounds include triglycidyl isocyanurate, tetraglycidyl diaminodiphenylmethane, tetraglycidyl benzenedimethanamine, tetraglycidyl diaminodiphenyl ether, triglycidyl diaminodiphenylmethane, diglycidyl aniline, diglycidyl phenoxyaniline, diglycidyl piperazine, diglycidyl toluidine, diglycidyl aminophenol, triglycidyl aminophenol, diglycidyl aminocresol, triglycidyl aminocresol, and derivatives of the preceding examples.

Examples of alicyclic-type epoxy compounds include 3,4-epoxycyclohexylmethyl-3',4'-epoxycyclohexanecarboxylate, 3,4-epoxy-6-methyl-cyclohexylmethyl-3',4'-epoxy-6-methyl-cyclohexanecarboxylate, bis(3,4-epoxycyclohexylmethyl) adipate, bis(3,4-epoxy-6-methylcyclohexylmethyl) adipate, ethyleneoxy-3,4-epoxycyclohexane, dicyclopentadiene diepoxide, cyclohexadiene diepoxide, cyclooctadiene diepoxide, and derivatives of the preceding examples.

The curing agent may be an acid anhydride, a carboxylic acid, or the like, for example, and is preferably a carboxylic anhydride or a polybasic carboxylic acid.

One curing agent may be used individually, or two or more curing agents may be used together.

Examples of carboxylic anhydrides include phthalic anhydride, tetrahydrophthalic anhydride, hexahydrophthalic anhydride, methyltetrahydrophthalic anhydride, methylhexahydrophthalic anhydride, succinic anhydride, 3-dodecenylsuccinic anhydride, octenylsuccinic anhydride, dodecylsuccinic anhydride, maleic anhydride, methylnadic anhydride, chlorendic anhydride, pyromellitic anhydride, trimellitic anhydride, benzophenonetetracarboxylic anhydride, ethylene glycol bis(anhydrotrimate), methylcyclohexene tetracarboxylic anhydride, polyazelaic anhydride, polysebacic anhydride, and ethylene glycol bisanhydrotrimellitate.

Examples of polybasic carboxylic acids include 1,2,3,4-butanetetracarboxylic acid, 4-cyclohexene-1,2-dicarboxylic acid, cyclohexane-1,2-dicarboxylic acid, norbornane-2,3-dicarboxylic acid, malonic acid, maleic acid, succinic acid, fumaric acid, glutaric acid, phthalic acid, isophthalic acid, terephthalic acid, trimellitic acid, pyromellitic acid, naphthalenedicarboxylic acid, and naphthalenetricarboxylic acid, and polybasic fatty acids such as adipic acid, azelaic acid, sebacic acid, dimer acid, and trimer acid.

The compounding ratio of the curing agent relative to the epoxy resin is preferably not less than 0.4 mol and less than 1.0 mol, more preferably not less than 0.5 mol and not more than 0.9 mol, and even more preferably not less than 0.5 mol and not more than 0.8 mol relative to 1 mol of epoxy groups in the epoxy resin. When the compounding ratio of the curing agent is within any of the ranges set forth above, it tends to be possible to perform efficient reorganization of macromolecular structure through dynamic covalent bonds because hydroxy groups are present after polymerization.

A resin that includes an ester bond as a dynamic covalent bond can be produced by, for example, heating, mixing, and stirring the above-described polyfunctional epoxy compound, other optional monomers to an extent not contrary to the object of the present disclosure, and the above-described curing agent.

(Resin including imine bond)

A resin that includes an imine bond as a dynamic covalent bond tends to have a short resin decomposition time.

A reversible reaction of the imine bond may be an imine-amine exchange reaction illustrated below, for example. Note that in the following reaction formula, $R_7$, $R_8$, and $R_9$ each independently represent any chemical structure.

[Chem. 4]

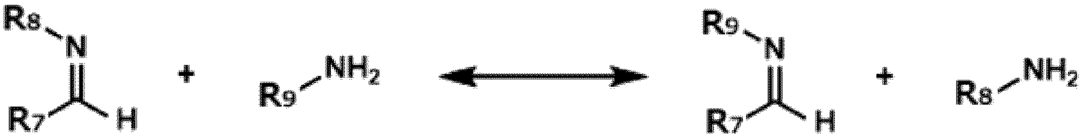

A reinforced composite material that contains a resin including an imine bond as a dynamic covalent bond can be recycled because a macromolecular network structure can be returned to monomers and chain-shaped low-molecular weight derivatives through bond dissociation by an imine-amine exchange reaction.

A resin that includes an imine bond as a dynamic covalent bond can be obtained by, for example, causing a condensation reaction of an aldehyde compound or ketone compound including two or more carbonyl groups in a molecule, an amine compound including two or more primary amino groups in a molecule, and other optional monomers to an extent not contrary to the object of the present disclosure.

The amine compound including two or more primary amino groups in a molecule may, for example, be the same as any of those given as examples as raw materials for synthesizing the resin including a VU bond described above.

One amine compound including two or more primary amino groups in a molecule may be used individually, or two or more amine compounds including two or more primary amino groups in a molecule may be used together.

The aldehyde compound including two or more carbonyl groups in a molecule may be terephthalaldehyde, isophthalaldehyde, 2,5-diformylfuran, 3,4-diformylthiophene, 2,4-diformylimidazole, 3,4-dicarboxyaldehyde pyrrole, or the like.

One aldehyde compound including two or more carbonyl groups in a molecule may be used individually, or two or more aldehyde compounds including two or more carbonyl groups in a molecule may be used together.

The primary amino group content of monomer units derived from the amine compound including two or more primary amino groups in a molecule is preferably 1.01 mol% to 1.5 mol%, and more preferably 1.05 mol% to 1.3 mol% relative to the carbonyl group content of monomer units derived from the aldehyde compound or ketone compound. When the primary amino group content is within any of the ranges set forth above, the density of a three-dimensional crosslinked structure formed through a condensation reaction of a carbonyl group of the aldehyde compound or ketone compound and a primary amino group of the amine compound tends to be suitably adjusted, and high mechanical properties and good fluidity tend to be obtained.

A resin that includes an imine bond as a dynamic covalent bond can be produced by, for example, dissolving the above-described aldehyde compound or ketone compound, the above-described amine compound, and other optional monomers to an extent not contrary to the object of the present disclosure in an organic solvent (for example, methanol or ethanol), and then performing mixing and stirring thereof.

(Resin including carbonate bond)

A resin that includes a carbonate bond as a dynamic covalent bond tends to result in a reinforced composite material having high mechanical strength.

A reversible reaction of the carbonate bond may be a carbonate exchange reaction illustrated below, for example. Note that $R_{11}$, $R_{12}$, and $R_{13}$ in the following reaction formula each independently represent any chemical structure.

[Chem. 5]

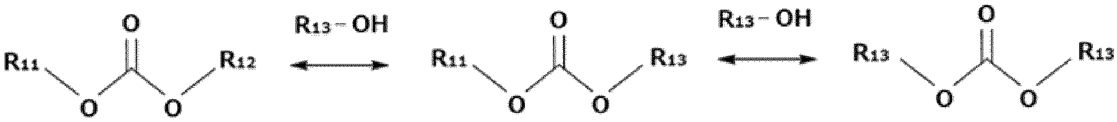


A reinforced composite material that contains a resin including a carbonate bond as a dynamic covalent bond can be recycled because a macromolecular network structure can be returned to monomers and chain-shaped low-molecular weight derivatives through bond dissociation by a carbonate exchange reaction.

A resin that includes a carbonate bond as a dynamic covalent bond can be obtained by, for example, causing ring-opening polymerization of a bis(cyclic carbonate) in the presence of a polyol and other optional monomers to an extent not contrary to the object of the present disclosure.

The bis(cyclic carbonate) may be a bis(six-membered cyclic carbonate) or the like, for example.

The polyol may be 1,4-butanediol, 1,5-pentanediol, 1,6-hexanediol, 1,7-heptanediol, 1,8-octanediol, or the like,

for example.

One polyol may be used individually, or two or more polyols may be used together.

The compounding ratio of hydroxy groups in the polyol relative to carbonate groups of the bis(cyclic carbonate) is preferably 1.01 mol to 1.5 mol, more preferably 1.03 mol% to 1.3 mol%, and even more preferably 1.05 mol% to 1.2 mol% relative to 1 mol of carbonate groups of the bis(cyclic carbonate). When the compounding ratio of hydroxy groups in the polyol is within any of the ranges set forth above, it tends to be possible to perform efficient reorganization of macromolecular structure through dynamic covalent bonds because hydroxy groups are present after polymerization.

A resin that includes a carbonate bond as a dynamic covalent bond can be produced by, for example, dissolving the above-described bis(cyclic carbonate), the above-described polyol, and other optional monomers to an extent not contrary to the object of the present disclosure in an organic solvent (for example, anhydrous dichloromethane), and then performing heating and curing thereof.

(Resin including cyclic acetal bond)

A resin that includes a cyclic acetal bond as a dynamic covalent bond tends to have a short resin decomposition time.

A reversible reaction of the cyclic acetal bond may be a metathesis reaction illustrated below, for example. Note that $R_{14}$, $R_{15}$, $R_{16}$, and $R_{17}$ in the following reaction formula each independently represent any chemical structure.

[Chem. 6]

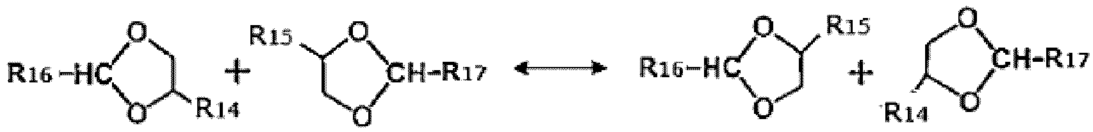

A reinforced composite material that contains a resin including a cyclic acetal bond as a dynamic covalent bond can be recycled because a macromolecular network structure can be returned to monomers and chain-shaped low-molecular weight derivatives through bond dissociation by a metathesis reaction or using a low-molecular weight alcohol.

A resin that includes a cyclic acetal bond as a dynamic covalent bond can be obtained by, for example, performing UV curing of a monomer including a cyclic acetal bond and other optional monomers.

The monomer including a cyclic acetal bond may be 3,9-divinyl-2,4,8,10-tetraoxaspiro[5.5]undecane or the like, for example.

Examples of other monomers include 1,6-hexanedithiol (HDT) and 1,2,4-trivinylcyclohexane (TVC).

A polymerization initiator used in the UV curing may be 2,2-dimethoxy-2-phenylacetophenone (DMPA) or the like, for example.

A resin that includes a cyclic acetal bond as a dynamic covalent bond can be produced by, for example, performing UV curing of the above-described monomer including a cyclic acetal bond and other optional monomers to an extent not contrary to the object of the present disclosure.

Examples of catalysts that can accelerate an ester exchange reaction in a resin including an ester bond as a dynamic covalent bond include zinc(II) acetate, zinc(II) acetylacetonate, zinc(II) naphthenate, iron(III) acetylacetonate, cobalt(II) acetylacetonate, aluminum isopropoxide, titanium isopropoxide, methoxide (triphenylphosphine) copper(I) complex, ethoxide (triphenylphosphine) copper(I) complex, propoxide (triphenylphosphine) copper(I) complex, isopropoxide (triphenylphosphine) copper(I) complex, methoxide bis(triphenylphosphine) copper(II) complex, ethoxide bis(triphenylphosphine) copper(II) complex, propoxide bis(triphenylphosphine) copper(II) complex, isopropoxide bis(triphenylphosphine) copper(II) complex, tris(2,4-pentanedionato)cobalt(III), tin(II) diacetate, tin(II) di(2-ethylhexanoate), N,N-dimethyl-4-aminopyridine, diazabicycloundecene, diazabicyclononene, triazabicyclodecene, and triphenylphosphine.

The additive amount of the catalyst is preferably 0.1 parts by mass to 10 parts by mass, more preferably 0.5 parts by mass to 8 parts by mass, and even more preferably 1 part by mass to 5 parts by mass when the total amount of the resin including an ester bond is taken to be 100 parts by mass.

Examples of catalysts that can accelerate an imine-amine exchange reaction in a resin including an imine bond as a dynamic covalent bond include sulfuric acid, paratoluenesulfonic acid, paratoluenesulfonic acid monohydrate, ethylphosphinic acid, phenylphosphinic acid, ethylphosphonic acid, phenylphosphonic acid, zinc(II) chloride, zinc(II) acetate, iron(II) chloride, iron(III) chloride, diethylamine, diisopropylamine, triethylamine, tributylamine, 1,8-diazabicyclo[5.4.0]-7-undecene, 1,5-diazabicyclo[4.3.0]non-5-ene, 1,5,7-triazabicyclo[4.4.0]dec-5-ene, ammonium chloride, ammonium acetate, and ammonium carbamate.

The additive amount of the catalyst is preferably 0.1 parts by mass to 6 parts by mass, more preferably 0.1 parts

by mass to 5 parts by mass, and even more preferably 0.1 parts by mass to 3 parts by mass when the total amount of the resin including an imine bond is taken to be 100 parts by mass.

Examples of catalysts that can accelerate a carbonate exchange reaction in a resin including a carbonate bond as a dynamic covalent bond include titanium(IV) isopropoxide, 1,5,7-triazabicyclo[4,4,0]dec-4-ene, bis(trifluoromethanesulfonato)zinc, diazabicycloundecene, yttrium(III) trifluoromethanesulfonate, and europium(III) trifluoromethanesulfonate.

The additive amount of the catalyst is preferably 1.0 parts by mass to 10 parts by mass, more preferably 1.2 parts by mass to 8 parts by mass, and even more preferably 1.5 parts by mass to 5 parts by mass when the total amount of the resin including a carbonate bond is taken to be 100 parts by mass.

[Other components]

(Thermoplastic resin)

The resin composition of the present embodiment can contain a thermoplastic resin other than the above-described resin as another component.

The thermoplastic resin may be a phenoxy-based resin, an acrylic-based resin, a methacrylic-based resin, a polyvinyl acetal-based resin, a thermoplastic polyimide-based resin, a polyamide-based resin, a polyamide imide-based resin, a polyphenylene oxide-based resin, a polyethersulfone-based resin, a polyester-based resin, a polyethylene-based resin, a polystyrene-based resin, a polysulfone-based resin, a polybutadiene-based resin, an ABS-based resin, a coumarone-based resin, or the like, for example.

One thermoplastic resin may be used individually, two or more thermoplastic resins having different weight-average molecular weights, for example, may be used together, or one thermoplastic resin or two or more thermoplastic resins may be used together with prepolymers thereof.

Of these examples, the inclusion of one or more selected from the group consisting of a polyimide-based resin, a polyamide-based resin, a phenoxy-based resin, and a coumarone-based resin is preferable.

Examples of the phenoxy-based resin include, but are not specifically limited to, phenoxy resins having a bisphenol skeleton such as phenoxy resins having a bisphenol A skeleton, phenoxy resins having a bisphenol F skeleton, phenoxy resins having a bisphenol S skeleton, phenoxy resins having a bisphenol M (4,4'-(1,3-phenylenediisopropylidene)bisphenol) skeleton, phenoxy resins having a bisphenol P (4,4'-(1,4)-phenylenediisopropylidene)bisphenol) skeleton, and phenoxy resins having a bisphenol Z (4,4'-cyclohexylidenebisphenol) skeleton, phenoxy resins having a novolac skeleton, phenoxy resins having an anthracene skeleton, phenoxy resins having a fluorene skeleton, phenoxy resins having a dicyclopentadiene skeleton, phenoxy resins having a norbornene skeleton, phenoxy resins having a naphthalene skeleton, phenoxy resins having a biphenyl skeleton, and phenoxy resins having an adamantane skeleton. Moreover, a phenoxy resin that has a structure including a plurality of the types of skeletons described above can be used, or phenoxy resins differing in terms of the ratios of skeletons can be used as the phenoxy-based resin. Furthermore, a plurality of phenoxy resins having different skeletons can be used, a plurality of phenoxy resins having different weight-average molecular weights can be used, or prepolymers thereof can be used together.

The lower limit for the weight-average molecular weight (Mw) of the phenoxy-based resin is 10,000 or more, for example, preferably 15,000 or more, and more preferably 20,000 or more. When the lower limit for the weight-average molecular weight (Mw) is within any of the ranges set forth above, compatibility with other resins and solubility in solvents can be improved. On the other hand, the upper limit for the weight-average molecular weight (Mw) of the phenoxy-based resin is 60,000 or less, for example, preferably 55,000 or less, and more preferably 50,000 or less.

The content of the thermoplastic resin in the resin composition of the present embodiment when the resin composition (all solid content when the resin composition is in the form of a varnish) is taken to be 100 mass% is preferably 5 mass% to 50 mass%, more preferably 10 mass% to 40 mass%, and even more preferably 15 mass% to 30 mass% from a viewpoint of recyclability.

(Curing accelerator)

The resin composition of the present embodiment may contain a curing accelerator (curing catalyst). The inclusion of a curing accelerator can improve curability of the resin composition.

The content of the curing accelerator in the resin composition of the present embodiment when the resin composition (all solid content when the resin composition is in the form of a varnish) is taken to be 100 mass% is preferably 0.1 mass% to 10 mass%, more preferably 0.5 mass% to 5 mass%, and even more preferably 1 mass% to 3 mass%.

(Inorganic filler)

The resin composition may contain an inorganic filler.

The inorganic filler may be a silicate such as talc, calcined clay, non-calcined clay, mica, or glass; an oxide such as titanium oxide, alumina, boehmite, silica, or fused silica; a carbonate such as calcium carbonate, magnesium carbonate, or hydrotalcite; a hydroxide such as aluminum hydroxide, magnesium hydroxide, or calcium hydroxide; a sulfate or sulfite such as barium sulfate, calcium sulfate, or calcium sulfite; a borate such as zinc borate, barium metaborate, aluminum borate, calcium borate, or sodium borate; a nitride such as aluminum nitride, boron nitride, silicon nitride, or carbon nitride; a titanate such as strontium titanate or barium titanate; or the like, for example.

Of these inorganic fillers, talc, alumina, glass, silica, mica, aluminum hydroxide, and magnesium hydroxide are preferable, and silica is particularly preferable. One of these examples may be used individually as the inorganic filler, or two or more of these examples may be used together as the inorganic filler.

The lower limit for the average particle diameter of the inorganic filler is not specifically limited and may be set as 0.01 μm or more, or may be set as 0.05 μm or more, for example. When the lower limit for the average particle diameter is within any of the ranges set forth above, increased viscosity of the resin composition in the form of a varnish described further below can be inhibited, and workability during production of a reinforced composite material can be improved. Moreover, the upper limit for the average particle diameter of the inorganic filler is not specifically limited, but is preferably 5.0 μm or less, more preferably 2.0 μm or less, and even more preferably 1.0 μm or less, for example. When the upper limit for the average particle diameter is within any of the ranges set forth above, it is possible to inhibit phenomena such as sedimentation of the inorganic filler in the resin composition in the form of a varnish described further below and to obtain a uniform resin composition.

In the present embodiment, a particle size distribution by volume of particles of the inorganic filler can be measured by a laser diffraction particle size analyzer (LA-500 produced by Horiba, Ltd.), and then the median diameter (D50) in that particle size distribution can be taken to be the average particle diameter of the inorganic filler, for example.

An inorganic filler for which the average particle diameter is monodisperse may be used, or an inorganic filler for which the average particle diameter is polydisperse may be used without any specific limitations. Moreover, one inorganic filler or two or more inorganic fillers for which the average particle diameter is monodisperse and/or polydisperse may be used together.

The lower limit for the content of the inorganic filler is not specifically limited, but when the resin composition (all solid content when the resin composition is in the form of a varnish) is taken to be 100 mass%, the lower limit is preferably 40 mass% or more, more preferably 50 mass% or more, and even more preferably 60 mass% or more, for example. When the lower limit for the content is within any of the ranges set forth above, the resin composition can be provided with particularly low thermal expansion and low water absorption. On the other hand, the upper limit for the content of the inorganic filler is not specifically limited, but when the resin composition is taken to be 100 mass%, the upper limit may be set as 85 mass% or less, may be set as 80 mass% or less, or may be set as 75 mass% or less, for example. This improves handleability during production of a reinforced composite material.

(Coupling agent)

The resin composition of the present embodiment may contain a coupling agent. The coupling agent may be directly added during production of the resin composition or may be added to the inorganic filler in advance. The use of a coupling agent can improve interfacial wettability of the inorganic filler with each resin. Therefore, particularly in a case in which an inorganic filler is included, the use of a coupling agent is preferable and can improve heat resistance of the resin composition.

The coupling agent may be a silane coupling agent such as an epoxy silane coupling agent, a cationic silane coupling agent, or an amino silane coupling agent; a titanate-based coupling agent; a silicone oil-type coupling agent; or the like, for example. One coupling agent may be used individually, or two or more coupling agents may be used together.

In the present embodiment, the coupling agent may include a silane coupling agent. This makes it possible to increase interfacial wettability of the inorganic filler and each resin.

Various types of silane coupling agents can be used, examples of which include epoxy silanes, amino silanes, alkyl silanes, ureido silanes, mercapto silanes, and vinyl silanes.

Specific examples include γ-aminopropyltriethoxysilane, γ-aminopropyltrimethoxysilane, N-β-(aminoethyl)-γ-aminopropyltrimethoxysilane, N-β-(aminoethyl)-γ-aminopropylmethyldimethoxysilane, N-phenyl-γ-aminopropyltriethoxysilane, N-phenyl-γ-aminopropyltrimethoxysilane, N-β-(aminoethyl)-γ-aminopropyltriethoxysilane, N-6-(aminohexyl)-3-aminopropyltrimethoxysilane, N-(3-(trimethoxysilylpropyl)-1,3-benzenedimethanane, γ-glycidoxypropyltriethoxysilane, γ-glycidoxypropyltrimethoxysilane, γ-glycidoxypropylmethyldimethoxysilane, β-(3,4-epoxycyclohexyl)ethyltrimethoxysilane, γ-mercaptopropyltrimethoxysilane (also referred to as 3-mercaptopropyltrimethoxysilane), methyltrimethoxysilane, γ-ureidopropyltriethoxysilane, and vinyltriethoxysilane. One of these silane coupling agents or a combination of two or

more of these silane coupling agents can be used. Of these silane coupling agents, epoxy silanes, mercapto silanes, and amino silanes are preferable, with a primary amino silane or an anilino silane being more preferable as an amino silane.

The content of the coupling agent can be adjusted as appropriate relative to the specific surface area of the inorganic filler. The lower limit for the content of the coupling agent such as described above may be set as 0.01 mass% or more, for example, and is preferably 0.05 mass% or more when the resin composition (all solid content when the resin composition is in the form of a varnish) is taken to be 100 mass%. When the content of the coupling agent is not less than any of the lower limits set forth above, the inorganic filler can be sufficiently covered, and heat resistance of the resin composition can be improved. On the other hand, the upper limit for the content of the coupling agent may be set as 3 mass% or less, for example, and is preferably 1.5 mass% or less relative to 100 mass% of the resin composition. When the content of the coupling agent is not more than any of the upper limits set forth above, the effect thereof on reactions can be suppressed, and reduction of bending strength, etc. of the resin composition can be inhibited.

(Additives)

The resin composition of the present embodiment may contain additives other than the above-described components to an extent that the object of the present disclosure is not lost. Examples of such additives include coloring agents including one or more selected from the group consisting of a dye such as a green, red, blue, yellow, or black dye, a pigment such as a black pigment, and a colorant, low stress agents, defoamers, leveling agents, ultraviolet absorbers, blowing agents, antioxidants, flame retardants, ion scavengers, rubber components, light stabilizers, dispersants, lubricants, plasticizers, and antistatic agents. One of these additives may be used individually, or two or more of these additives may be used in combination.

The content of additives in the resin composition of the present embodiment when the resin composition (all solid content when the resin composition is in the form of a varnish) is taken to be 100 mass% is preferably 0.1 mass% to 25 mass%, more preferably 0.2 mass% to 20 mass%, and even more preferably 0.5 mass% to 15 mass%. Moreover, the content of additives in a reinforced composite material of the present embodiment when the reinforced composite material is taken to be 100 mass% is preferably 0.1 mass% to 5 mass%, more preferably 0.2 mass% to 4.5 mass%, and even more preferably 0.3 mass% to 4.0 mass%. When the content of additives is within any of the ranges set forth above, this reduces the amount of additive matter remaining at (attached to) the surface of recovered reinforcing fiber when reinforcing fiber is separated and recovered from the reinforced composite material, and thus adhesion and bundling of fibers can be inhibited, and the recovered reinforcing fiber can more easily be reused.

Note that the content of additives can be confirmed not only from charging ratios, but also by extracting additives from the obtained reinforced composite material using a solvent or the like or extracting additives after decomposition of the reinforced composite material through a decomposition solution having a low-molecular weight amine or alcohol dissolved therein, and then using an analyzer for liquid chromatography or the like to quantify the content of additives.

Examples of pigments that may be used include inorganic pigments such as kaolin, synthetic iron oxide red, cadmium yellow, nickel-titanium yellow, strontium yellow, hydrous chromium oxide, chromium oxide, cobalt aluminate, and synthetic ultramarine blue, polycyclic pigments such as phthalocyanine, and azo pigments.

Examples of dyes that may be used include isoindolinone, isoindoline, quinophthalone, xanthene, diketopyrrolopyrrole, perylene, perinone, anthraquinone, indigoid, oxazine, quinacridone, benzimidazolone, violanthrone, phthalocyanine, and azomethine.

One or more selected from the group consisting of butadiene rubber, acrylic rubber, and silicone rubber, for example, can be included as a rubber component.

The rubber component may be contained in a particulate form. Such rubber particles may be core-shell rubber particles, crosslinked acrylonitrile butadiene rubber particles, crosslinked styrene butadiene rubber particles, acrylic rubber particles, silicone particles, or the like, for example.

In the present embodiment, the resin composition can contain a solvent in a case in which the resin composition is in the form of a varnish.

The solvent may be an organic solvent such as methanol, acetone, methyl ethyl ketone, methyl isobutyl ketone, toluene, ethyl acetate, cyclohexane, heptane, cyclohexane, cyclohexanone, tetrahydrofuran, dimethylformamide, dimethylacetamide, dimethyl sulfoxide, ethylene glycol, a CELLOSOLVE-based solvent, a CARBITOL-based solvent, anisole, or N-methylpyrrolidone, for example. One of these solvents may be used individually, or two or more of these solvents may be used in combination.

In a case in which the resin composition is in the form of a varnish, the amount of solid content in the resin composition may be set as 30 mass% to 80 mass%, for example, and is more preferably 40 mass% to 70 mass%. When the amount of solid content in the resin composition is within any of the ranges set forth above, a resin composition having exceptionally good workability and film formability is obtained.

The resin composition of the present embodiment can be produced by mixing and stirring the resin that includes a monomer unit derived from the (A) bisacetoacetic acid ester compound and a monomer unit derived from the (B) amine

compound and that has a three-dimensional crosslinked structure with the other components and additives described above that are used as necessary.

In the case of a resin composition in the form of a varnish, the resin composition can be produced by dissolving, mixing, and stirring the above-described components in a solvent using various types of mixers such as those of an ultrasonic dispersion-type, a high-pressure collision dispersion-type, a high-speed rotation dispersion-type, a bead mill-type, a high-shear dispersion-type, and a planetary dispersion-type.

The difference (Tv - Tg) between the bond exchange temperature (Tv) and the glass-transition temperature (Tg) of the resin composition of the present embodiment is preferably 10°C or more.

The bond exchange temperature (Tv) is the temperature at which the previously described amine exchange begins and is measured as the temperature at which viscosity starts to decrease during viscoelastic measurement. The occurrence of bond exchange is thought to cause pulling and movement of a main chain through a functional group where bond exchange occurs, and to thereby create fluidity and reduce viscosity.

The bond exchange temperature (Tv) and the glass-transition temperature (Tg) are determined by the molecular skeleton and the amino group content, but a difference (Tv - Tg) of less than 10°C between these temperatures makes it more likely that shaping defects will arise due to sudden resin flow during secondary processing of a reinforced composite material and tends to make control of shaping conditions (particularly temperature control) difficult. Moreover, when this difference (Tv - Tg) is less than 10°C, there is sudden reduction of resin viscosity at high temperature or during combustion, making shape retention difficult. For example, in the case of use in a battery or the like, it tends to be difficult to ensure safety of the battery. When the difference (Tv - Tg) is 10°C or more, this tends to result in a resin composition that does not readily cause shaping defects and experiences little dimensional change of shape.

The difference (Tv - Tg) is more preferably 20°C or more, and even more preferably 30°C or more. The upper limit for the difference (Tv - Tg) is not specifically limited but is preferably 130°C or less, more preferably 110°C or less, and even more preferably 100°C or less.

The bond exchange temperature (Tv) of the resin composition of the present embodiment is preferably 10°C to 150°C, more preferably 50°C to 140°C, and even more preferably 80°C to 130°C.

Moreover, the glass-transition temperature (Tg) of the resin composition of the present embodiment is preferably -30°C to 120°C, more preferably 0°C to 120°C, and even more preferably 40°C to 120°C.

Note that the bond exchange temperature (Tv) can be measured through viscoelastic measurement and, more specifically, can be measured by a method subsequently described in the EXAMPLES section. The glass-transition temperature (Tg) can be measured using a differential scanning calorimeter (DSC) and, more specifically, can be measured by a method subsequently described in the EXAMPLES section.

The crosslink density of the resin composition of the present embodiment is preferably 200 $mol/m^3$ to 2,000 $mol/m^3$, more preferably 300 $mol/m^3$ to 1,500 $mol/m^3$, and even more preferably 400 $mol/m^3$ to 1,200 $mol/m^3$. When the crosslink density is within any of the ranges set forth above, high mechanical properties and good fluidity tend to be obtained. Good fluidity has an effect of making shaping defects or the like unlikely to occur during shaping.

Note that the crosslink density can be calculated from data obtained through viscoelastic measurement and, more specifically, can be determined by a method subsequently described in the EXAMPLES section. Moreover, the magnitude of the stress relaxation time at a prescribed temperature (for example, 180°C) can be evaluated as an indicator of fluidity, for example.

The aromatic group content in the resin composition of the present embodiment is preferably less than 10 mass%, more preferably less than 5 mass%, and even more preferably less than 3 mass%. A higher aromatic group content results in poorer swelling properties, longer recycling time, and the need for a high recycling temperature, whereas an aromatic group content within any of the ranges set forth above enables recycling with a specific time and temperature and tends to improve recyclability. No specific limitations are placed on the lower limit for the aromatic group content.

Examples of aromatic groups include a phenyl group, a biphenyl group, and a diphenylmethane structure group that may include a heteroatom in the structure.

Note that the aromatic group content can, more specifically, be measured by a method subsequently described in the EXAMPLES section.

<Reinforced composite material>

A reinforced composite material of the present embodiment contains the resin composition of the present embodiment set forth above and reinforcing fiber. The reinforced composite material of the present embodiment may have a configuration in which a reinforcing fiber substrate is contained in the resin composition of the present embodiment set forth above.

As a result of the reinforced composite material of the present embodiment containing the resin composition of the present embodiment that has the three-dimensional crosslinked structure described above, the reinforced composite material of the present embodiment has adequate mechanical characteristics, heat resistance characteristics, and

chemical resistance characteristics while also being recyclable.

The reinforced composite material can be produced by, for example, impregnating the resin composition into the reinforcing fiber substrate and subsequently curing the resin composition.

A commonly known method can be adopted without any specific limitations as the method by which the resin composition is impregnated into the reinforcing fiber substrate in the present embodiment. For example, a method in which the resin composition is dissolved in a solvent to prepare a resin varnish and then the reinforcing fiber substrate is immersed in the resin varnish, a method in which the aforementioned resin varnish is applied onto the reinforcing fiber substrate by any of various types of coaters, a method in which the aforementioned resin varnish is sprayed onto the reinforcing fiber substrate by spraying, or a method in which resin films formed of the resin composition are laminated onto both sides of a sheet-shaped reinforcing fiber substrate may be adopted. The solvent is removed through heating under reduced pressure.

It is preferable that the reinforcing fiber substrate is preheated to 40°C to 80°C using an oven or the like when the reinforcing fiber substrate is to be impregnated with the resin composition.

Moreover, the reinforced composite material can alternatively be produced by a production method in which a catalyst is subsequently impregnated with respect to a reinforced composite material that has already been cured so as to form a dynamic covalent bond. For example, a method in which a catalyst is mechanically impregnated or a method in which a catalyst is impregnated using a solvent or the like with respect to a reinforced composite material containing an epoxy resin or the like having an ester group can be used to make the ester bond a dynamic covalent bond.

The shape and size of the reinforced composite material are not specifically limited and may be set as appropriate in accordance with the shape, size, etc. of a desired shaped product. For example, the reinforced composite material can have a sheet shape.

[Reinforcing fiber]

The reinforcing fiber of the present embodiment may be continuous reinforcing fiber or may be discontinuous reinforcing fiber. In a case in which the reinforcing fiber of the present embodiment is continuous reinforcing fiber, no limitations are placed on the form or arrangement of the fiber, and the continuous reinforcing fiber may be a fiber structure such as long fibers that have been pulled and aligned in a single direction, a single tow, a woven fabric, a knitted fabric, or a braid.

The type of reinforcing fiber may be carbon fiber, glass fiber, aramid fiber, boron fiber, PBO fiber, high-strength polyethylene fiber, alumina fiber, silicon carbide fiber, or the like. Glass fiber, carbon fiber, and aramid fiber are preferable from viewpoints of mechanical characteristics, thermal characteristics, and versatility, and carbon fiber and glass fiber are preferable from a viewpoint of producibility.

One type of reinforcing fiber may be used individually, or two or more types of reinforcing fiber may be used in combination.

Reinforcing fiber used in the present embodiment preferably has a fiber length of 10 mm or more, and more preferably 50 mm or more. A fiber length of 10 mm or more makes it easy to recover just fiber from a decomposition solution (solvent) used in decomposition of resin in the reinforced composite material, whereas a fiber length of less than 10 mm necessitates the use of filter paper having fine openings or the like and causes reduction of the recovery rate. Moreover, a fiber length of less than 10 mm results in recovery of reinforcing fiber in a form containing solvent and monomer formed through resin decomposition, and thus is problematic when it comes to reuse.

Moreover, although no specific limitations are placed on the upper limit for the fiber length of the reinforcing fiber, the upper limit is preferably longer than the length of a longest side of the reinforced composite material.

Note that the length, diameter, etc. of fibers can be evaluated not only from the raw material fibers, but also through observation of fibers recovered after decomposition of the reinforced composite material using an electron microscope or the like. Moreover, the single fiber fineness can be confirmed from the lengths, diameters, etc. of fibers that are evaluated in this manner.

(Carbon fiber)

Carbon fiber is fiber produced through high-temperature carbonization of acrylic fiber or pitch (by-product of petroleum, coal, coal tar, etc.) as a raw material.

In particular, the use of acrylic-based carbon fiber having high tensile strength is preferable.

Such acrylic-based carbon fiber can be produced through the steps described below, for example. A spinning stock containing polyacrylonitrile obtained from monomer(s) having acrylonitrile as a main component is spun by wet spinning, dry-wet spinning, dry spinning, or melt spinning. The coagulated yarn after spinning undergoes a yarn forming step to yield a precursor and then undergoes steps such as stabilization and carbonization to yield carbon fiber.

The carbon fiber can be used in the form of a twisted, untwisted, or non-twisted yarn, for example. However, in the

case of a twisted yarn, filaments forming the carbon fiber are not in parallel arrangement, which is a cause of reduction of mechanical characteristics of the obtained carbon fiber-reinforced composite material. Therefore, it is preferable to use an untwisted or non-twisted yarn that gives a good balance of formability and strength characteristics of the carbon fiber-reinforced composite material.

In order to improve adhesiveness with the matrix resin, it is normally preferable that the carbon fiber has undergone oxidation treatment to introduce an oxygen-containing functional group. Although gas phase oxidation, liquid phase oxidation, or liquid phase electrolytic oxidation may be used as the method of oxidation treatment, liquid phase electrolytic oxidation is preferable from a viewpoint of enabling uniform treatment with high productivity.

In the present embodiment, an acidic electrolyte or an alkaline electrolyte may be adopted as an electrolyte that is used in the liquid phase electrolytic oxidation, but from a viewpoint of adhesiveness, it is more preferable that liquid phase electrolytic oxidation is performed in an alkaline electrolyte and that a sizing agent is subsequently applied.

The acidic electrolyte may be an inorganic acid such as sulfuric acid, nitric acid, hydrochloric acid, phosphoric acid, boric acid, or carbonic acid, an organic acid such as acetic acid, butyric acid, oxalic acid, acrylic acid, or maleic acid, or a salt such as ammonium sulfate or ammonium hydrogen sulfate, for example. Of these examples, it is preferable to use sulfuric acid and nitric acid, which display strong acidity.

The alkaline electrolyte may, more specifically, be an aqueous solution of a hydroxide such as sodium hydroxide, potassium hydroxide, magnesium hydroxide, calcium hydroxide, or barium hydroxide, an aqueous solution of a carbonate such as sodium carbonate, potassium carbonate, magnesium carbonate, calcium carbonate, barium carbonate, or ammonium carbonate, an aqueous solution of a hydrogen carbonate such as sodium hydrogen carbonate, potassium hydrogen carbonate, magnesium hydrogen carbonate, calcium hydrogen carbonate, barium hydrogen carbonate, or ammonium hydrogen carbonate, an aqueous solution of ammonia, tetraalkylammonium hydroxide, or hydrazine, or the like. Of these examples, it is preferable to use an aqueous solution of ammonium carbonate or ammonium hydrogen carbonate or to use an aqueous solution of tetraalkylammonium hydroxide displaying strong alkalinity from a viewpoint of the absence of an alkali metal that may interfere with curing of the matrix resin.

In the present embodiment, the total amount of electrolytic charge used in electrolytic treatment is preferably 3 coulombs to 300 coulombs per 1 g of carbon fiber. By setting the total amount of electrolytic charge as 3 C/g or more, it is possible to sufficiently introduce functional groups at the surface of carbon fiber and to obtain a material having excellent interfacial adhesiveness between the matrix resin and the carbon fiber. On the other hand, by setting the total amount of electrolytic charge as 300 C/g or less, widening of defects at the surfaces of single fibers of the carbon fiber can be inhibited, and reduction of strength of the carbon fiber can be restricted.

Examples of commercially available carbon fiber products that may be used include TORAYCA® T800G-24K (TORAYCA is a registered trademark in Japan, other countries, or both), TORAYCA® T300-3K, TORAYCA® T700G-12K, and TORAYCA® T1100G-24K (all produced by Toray Industries, Inc.).

Carbon fiber used in the present embodiment preferably has a single fiber fineness of 0.2 dtex to 2.0 dtex, and more preferably 0.4 dtex to 1.8 dtex. When the single fiber fineness is less than 0.2 dtex, the carbon fiber may not be sufficiently impregnated with the resin composition, and this may result in reduction of fatigue resistance. Moreover, when the single fiber fineness is more than 2.0 dtex, reduction of fiber surface area per unit volume of the reinforced composite material reduces the effects of the subsequently described sizing agent and fiber surface functional groups and necessitates longer recycling time.

In carbon fiber used in the present embodiment, the filament count in a single fiber bundle is preferably within a range of 2,500 to 50,000. When the filament count is less than 2,500, this makes fiber waviness more likely and tends to act as a cause of strength reduction. Moreover, when the filament count is more than 50,000, this may make impregnation with the resin composition difficult during production or shaping of the reinforced composite material. The filament count is more preferably within a range of 2,800 to 40,000.

The carbon fiber of the present embodiment is preferably sizing agent-coated carbon fiber. By adopting sizing agent-coated carbon fiber, the carbon fiber has excellent handleability and interfacial adhesiveness with the matrix resin and is suitable for use in a carbon fiber-reinforced composite material. Moreover, the sizing agent acts catalytically during recycling of the carbon fiber-reinforced composite material and thus also has an effect of accelerating recycling.

In the present embodiment, the sizing agent preferably includes at least one type of sizing agent including an amino group. This is because the amino group of the sizing agent becomes positioned at the fiber surface through application of the sizing agent, thereby increasing the rate of bond exchange between resin and fiber, facilitating peeling of resin from the fiber surface, and shortening the recycling time. Moreover, the presence of the amino group of the sizing agent at the fiber surface results in interactions at fiber-resin interfaces once the fiber and resin have been composited, and thus tends to result in high adhesive strength and higher strength as a composite material. More specifically, the inclusion of an amino group-containing silane coupling agent or an epoxy resin compound, polyurethane resin compound, or polyamide resin compound including an amino group in a curing agent is preferable.

In the present embodiment, the sizing agent preferably includes one or more selected from the group consisting of a silane coupling agent, an epoxy resin compound, a polyurethane resin compound, and a polyamide resin compound.

The silane coupling agent included in the sizing agent may be propyltriethoxysilane; an amino silane such as γ-aminopropyltrimethoxysilane, γ-aminopropyltriethoxysilane, or N-β-(aminoethyl)-γ-aminopropylmethyldimethoxysilane; a mercapto silane such as γ-mercaptopropyltrimethoxysilane or γ-mercaptopropyltriethoxysilane; an epoxy silane such as 3-glycidoxypropylmethyldimethoxysilane; a vinyl silane; a maleic acid-type silane coupling agent; or the like, for example. These silane coupling agents may be used individually or may be used together.

The epoxy resin compound may be an aliphatic epoxy compound, an aromatic epoxy compound, or the like, for example. These epoxy resin compounds may be used individually or may be used together.

The polyurethane resin compound may be a polyether polyurethane resin, a polyester polyurethane resin, a polyurethane-based elastomer, or the like, for example. These polyurethane resin compounds may be used individually or may be used together.

The polyamide resin compound may be nylon 6, nylon 66, nylon 11, nylon 12, nylon 610, or the like, for example. These polyamide resin compounds may be used individually or may be used together.

The inclusion (coating) of an amino group-containing sizing agent on the reinforcing fiber (i.e., the presence of an amino group at the fiber surface) may be measured by methods such as a method in which the surfaces of fibers are directly observed prior to compositing or a method in which the surfaces of fibers remaining after decomposition of a resin portion of the reinforced composite material are observed, for example. The observation method may be observation by X-ray photoelectron spectroscopy (XPS), observation by time-of-flight secondary ion mass spectrometry (TOF-SIMS), or the like, for example. In particular, XPS is preferable as the observation method. Specifically, measurement can be performed by a method described in the subsequent EXAMPLES section.

In the present embodiment, the attached amount of the sizing agent is preferably 0.1 parts by mass or more, more preferably 0.1 parts by mass to 3.0 parts by mass, and even more preferably 0.2 parts by mass to 3.0 parts by mass relative to 100 parts by mass of the carbon fiber. When the attached amount of the sizing agent is within any of these ranges, high shear toughness can be expressed. The measurement method of the attached amount of the sizing agent involves sampling $2 \pm 0.5$ g of the sizing agent-coated carbon fiber, subjecting the sample to 15 minutes of heat treatment at 450°C in a nitrogen atmosphere, and dividing the mass change between before and after the heat treatment by the mass before the heat treatment to determine a mass% value.

(Glass fiber)

Glass fiber is a fibrous product obtained through melting and drawing of glass.

Glass fiber used in the present embodiment preferably has a single fiber fineness of 1.0 dtex to 10 dtex, and more preferably 1.5 dtex to 8.0 dtex. When the single fiber fineness is less than 1.0 dtex, the glass fiber may not be sufficiently impregnated with the resin composition, and this may result in reduction of fatigue resistance. Moreover, when the single fiber fineness is more than 10 dtex, reduction of fiber surface area per unit volume of the reinforced composite material reduces the effects of the subsequently described sizing agent and fiber surface functional groups and necessitates longer recycling time.

In glass fiber used in the present embodiment, the filament count in one fiber bundle is preferably within a range of 2,500 to 50,000. When the filament count is less than 2,500, this makes fiber waviness more likely and tends to act as a cause of strength reduction. Moreover, when the filament count is more than 50,000, this may make impregnation with the resin composition difficult during production or shaping of the reinforced composite material. The filament count is more preferably within a range of 2,800 to 40,000.

(Sizing agent)

In a case in which glass fiber is selected as the reinforcing fiber, a sizing agent (bundling agent) may be used.

In the present embodiment, the sizing agent preferably includes one or more selected from the group consisting of a silane coupling agent, an epoxy resin compound, a polyurethane resin compound, and a polyamide resin compound in the same manner as with the previously described carbon fiber.

Moreover, in the present embodiment, the sizing agent preferably includes at least one type of sizing agent including an amino group. This is because the amino group of the sizing agent becomes positioned at the fiber surface through application of the sizing agent, thereby increasing the rate of bond exchange between resin and fiber, facilitating peeling of resin from the fiber surface, and shortening the recycling time. Moreover, the presence of the amino group of the sizing agent at the fiber surface results in interactions at fiber-resin interfaces once the fiber and resin have been composited, and thus tends to result in high adhesive strength and higher strength as a composite material. More specifically, the inclusion of an amino group-containing silane coupling agent or an epoxy resin compound, polyurethane resin compound, or polyamide resin compound including an amino group in a curing agent is preferable.

The sizing agent preferably includes one or more selected from the group consisting of a silane coupling agent, a lubricant, and a binding agent, and more preferably includes at least a binding agent or a silane coupling agent.

Moreover, the sizing agent may be composed of a silane coupling agent and a binding agent, or may be composed of a silane coupling agent, a lubricant, and a bundling agent.
By adopting a sizing agent that creates strong bonds between glass fiber and resin coating the periphery thereof, it is possible to obtain a reinforced composite material having low porosity.
The sizing agent may be externally added to a used material or may be internally included in a used material. For example, there are instances in which a lubricant is included in a used commercially available product of a thermoplastic resin.

(Silane coupling agent)

The silane coupling agent contributes to improving interfacial adhesive strength of the glass fiber. Moreover, the silane coupling agent acts catalytically during recycling of the reinforced composite material, and thus also has an effect of accelerating recycling.
The silane coupling agent may be, but is not limited to, propyltriethoxysilane; an amino silane such as γ-aminopropyltrimethoxysilane, γ-aminopropyltriethoxysilane, or N-β-(aminoethyl)-γ-aminopropylmethyldimethoxysilane; a mercapto silane such as γ-mercaptopropyltrimethoxysilane or γ-mercaptopropyltriethoxysilane; an epoxy silane such as 3-glycidoxypropylmethyldimethoxysilane; a vinyl silane; a maleic acid-type silane coupling agent; or the like, for example. In a case in which a polyamide is used as a thermoplastic resin, it is preferable to select a silane coupling agent that readily bonds with a carboxyl group or amino group, which are terminal groups of a polyamide-based resin, and an amino silane is preferable.
Moreover, of the silane coupling agents described above, those that include an amino group are preferable particularly with respect to recyclability. This is because the presence of an amino group at the fiber surface increases the rate of bond exchange between resin and fiber, facilitates peeling of resin from the fiber surface, and shortens the recycling time.

(Lubricant)

The lubricant contributes to improving spreadability of the glass fiber.
Any typical liquid or solid lubricating material in accordance with the object can be used as the lubricant so long as it does not interfere with the silane coupling agent and the binding agent. Examples of the lubricant include, but are not limited to, animal/plant-based waxes and mineral-based waxes such as carnauba wax and lanolin wax; and surfactants such as fatty acid amides, fatty acid esters, fatty acid ethers, aromatic esters, and aromatic ethers.

(Binding agent)

The binding agent contributes to improving bundlability of the glass fiber and interfacial adhesive strength.
A polymer or a thermoplastic resin other than a thermoplastic resin serving as a main material of the reinforced composite material can be used as the binding agent in accordance with the object.
Examples of polymers that may be used as the binding agent include, but are not limited to, a homopolymer of acrylic acid, a copolymer of acrylic acid and another copolymerizable monomer, and salts of primary, secondary, and tertiary amines with these polymers. Moreover, a polyurethane-based resin synthesized from an isocyanate such as m-xylylene diisocyanate, 4,4'-methylenebis(cyclohexyl isocyanate), or isophorone diisocyanate and a polyester-based or polyether-based diol may suitably be used, for example.
The homopolymer of acrylic acid has a weight-average molecular weight of preferably 1,000 to 90,000, and more preferably 1,000 to 25,000.
Examples of copolymerizable monomers that may form the copolymer of acrylic acid and another copolymerizable monomer include, but are not limited to, one or more selected from the group consisting of acrylic acid, maleic acid, methacrylic acid, vinyl acetic acid, crotonic acid, isocrotonic acid, fumaric acid, itaconic acid, citraconic acid, and mesaconic acid among monomers including a hydroxy group and/or a carboxyl group (excluding a case in which only acrylic acid is used). It is preferable that one or more ester-based monomers are used as copolymerizable monomers.
Examples of salts of primary, secondary, and tertiary amines with the homopolymer or copolymer of acrylic acid include, but are not limited to, triethylamine salts, triethanolamine salts, and glycine salts. The degree of neutralization is preferably set as 20% to 90%, and is more preferably set as 40% to 60% from a viewpoint of improving stability of a mixed solution with other co-used agents (silane coupling agent, etc.) and reducing amine odor.
The weight-average molecular weight of the polymer of acrylic acid forming a salt is not specifically limited but is preferably within a range of 3,000 to 50,000. The weight-average molecular weight is preferably 3,000 or more from a viewpoint of improving bundlability of the glass fiber and is preferably 50,000 or less from a viewpoint of improving characteristics once a reinforced composite material is obtained.

In a case in which a polyamide is used as a thermoplastic resin, it is preferable that a resin having good wettability with the polyamide resin or a surface tension close to that of the polyamide resin is used as the binding agent. Specifically, an emulsion of a polyurethane resin, an emulsion of a polyamide resin, or modified product thereof can be selected, for example.

Examples of thermoplastic resins that may be used as the binding agent include, but are not limited to, polyolefin-based resins, polyamide-based resins, polyurethane-based resins, polyacetal-based resins, polycarbonate-based resins, polyester-based resins, polyether ketone, polyether ether ketone, polyether sulfone, polyphenylene sulfide, thermoplastic polyetherimide, thermoplastic fluororesins, and modified thermoplastic resins obtained through modification of these resins. A thermoplastic resin used as the binding agent is preferably a thermoplastic resin and/or modified thermoplastic resin of the same type as a resin covering the periphery of the reinforcing fiber because this improves adhesiveness between the glass fiber and the thermoplastic resin once a reinforced composite material is obtained.

Moreover, a modified thermoplastic resin is preferable as a thermoplastic resin used as the binding agent from viewpoints such as further improving adhesiveness between the reinforcing fiber and a thermoplastic resin covering the reinforcing fiber, reducing the ratio of an emulsifier component or eliminating the need for an emulsifier in a case in which the sizing agent is caused to attach to the glass fiber in the form of a water dispersion, and so forth.

The term "modified thermoplastic resin" refers to a thermoplastic resin having modified hydrophilicity, crystallinity, thermodynamic characteristics, etc. as a result of a different monomer component, other than a monomer component that can form a main chain of the thermoplastic resin, being copolymerized with the aim of altering properties of the thermoplastic resin.

Examples of modified thermoplastic resins that may be used as the binding agent include, but are not limited to, modified polyolefin-based resins, modified polyamide-based resins, and modified polyester-based resins.

The modified polyolefin-based resin that may be used as the binding agent is a copolymer of an olefin-based monomer such as ethylene or propylene with a monomer such as an unsaturated carboxylic acid and/or an ester of an unsaturated carboxylic acid that can be copolymerized with the olefin-based monomer or is a homopolymer of a monomer such as an unsaturated carboxylic acid and/or an ester of an unsaturated carboxylic acid that can be copolymerized with an olefin-based monomer. The modified polyolefin-based resin can be produced by a commonly known method. The modified polyolefin-based resin may be a random copolymer in which an olefin-based monomer is copolymerized with an unsaturated carboxylic acid and/or an ester of an unsaturated carboxylic acid, or may be a graft copolymer in which an unsaturated carboxylic acid is grafted to an olefin.

Examples of the olefin-based monomer include, but are not limited to, ethylene, propylene, and 1-butene. One of these olefin-based monomers may be used individually, or two or more of these olefin-based monomers may be used in combination.

The monomer that is copolymerizable with the olefin-based monomer may be an unsaturated carboxylic acid such as acrylic acid, maleic acid, maleic anhydride, methacrylic acid, vinyl acetic acid, crotonic acid, isocrotonic acid, fumaric acid, itaconic acid, citraconic acid, or mesaconic acid, an ester (methyl ester, ethyl ester, etc.) of any of these unsaturated carboxylic acids, or the like. One of these monomers may be used individually, or two or more of these monomers may be used in combination.

In a case in which the modified polyolefin-based resin is a copolymer of an olefin-based monomer and a monomer that is copolymerizable with the olefin-based monomer, the monomer ratio when the total mass of the copolymer is taken to be 100 mass% is preferably 60 mass% to 95 mass% of the olefin-based monomer and 5 mass% to 40 mass% of the monomer that is copolymerizable with the olefin-based monomer, and more preferably 70 mass% to 85 mass% of the olefin-based monomer and 15 mass% to 30 mass% of the monomer that is copolymerizable with the olefin-based monomer. When the olefin-based monomer is 60 mass% or more, good affinity with the matrix is achieved. Moreover, when the olefin-based monomer is 95 mass% or less, it is easier to uniformly apply the modified polyolefin-based resin onto the reinforcing fiber through the modified polyolefin-based resin having good water dispersibility.

In the modified polyolefin-based resin used as the binding agent, a modifying group such as a carboxyl group that has been introduced through copolymerization may be neutralized with a basic compound. Examples of the basic compound include, but are not limited to, alkalis such as sodium hydroxide and potassium hydroxide; ammonia; and amines such as monoethanolamine and diethanolamine. The weight-average molecular weight of the modified polyolefin-based resin used as the binding agent is not specifically limited but is preferably 5,000 to 200,000, and more preferably 50,000 to 150,000. The weight-average molecular weight is preferably 5,000 or more from a viewpoint of improving bundlability of the glass fiber and is preferably 200,000 or less from a viewpoint of improving emulsification stability when used as a water dispersion.

The modified polyamide-based resin that may be used as the binding agent is a modified polyamide compound having a hydrophilic group such as a polyalkylene oxide chain or a tertiary amine component introduced into a molecular chain. The modified polyamide-based resin can be produced by a commonly known method.

In a case in which a polyalkylene oxide chain is introduced into the molecular chain, the modified polyamide-based resin can be produced through copolymerization of a polyethylene glycol, polypropylene glycol, or the like that has

been partially or fully modified with a diamine or a dicarboxylic acid, for example. In a case in which a tertiary amine component is introduced, the modified polyamide-based resin can be produced through copolymerization of aminoethylpiperazine, bisaminopropylpiperazine, α-dimethylamino-ε-caprolactam, or the like, for example.

The modified polyester-based resin that may be used as the binding agent is a copolymer of a polycarboxylic acid or anhydride thereof with a polyol and is a resin having a hydrophilic group in the molecular skeleton thereof, inclusive of terminals. The modified polyester-based resin can be produced by a commonly known method.

The hydrophilic group may be a polyalkylene oxide group, a sulfonate, a carboxyl group, or a neutralized salt thereof, for example. The polycarboxylic acid or anhydride thereof may be an aromatic dicarboxylic acid, a sulfonate-containing aromatic dicarboxylic acid, an aliphatic dicarboxylic acid, an alicyclic dicarboxylic acid, a polycarboxylic acid having a functionality of 3 or more, or the like.

Examples of aromatic dicarboxylic acids include, but are not limited to, phthalic acid, terephthalic acid, isophthalic acid, orthophthalic acid, 1,5-naphthalenedicarboxylic acid, 2,6-naphthalenedicarboxylic acid, and phthalic anhydride.

Examples of sulfonate-containing aromatic dicarboxylic acids include, but are not limited to, sulfoterephthalic acid salts, 5-sulfoisophthalic acid salts, and 5-sulfoorthophthalic acid salts.

Examples of aliphatic dicarboxylic acids and alicyclic dicarboxylic acids include, but are not limited to, fumaric acid, maleic acid, itaconic acid, succinic acid, adipic acid, azelaic acid, sebacic acid, dimer acid, 1,4-cyclohexanedicarboxylic acid, succinic anhydride, and maleic anhydride.

Examples of polycarboxylic acids having a functionality of 3 or more include, but are not limited to, trimellitic acid, pyromellitic acid, trimellitic anhydride, and pyromellitic anhydride.

Of these examples, it is preferable that an aromatic dicarboxylic acid constitutes 40 mol% to 99 mol% of all polycarboxylic acid components from a viewpoint of improving heat resistance of the modified polyester-based resin. Moreover, it is preferable that a sulfonate-containing aromatic dicarboxylic acid constitutes 1 mol% to 10 mol% of all polycarboxylic acid components from a viewpoint of emulsification stability when the modified polyester-based resin is in the form of a water dispersion.

The polyol forming the modified polyester-based resin may be a diol, a polyol having a functionality of 3 or more, or the like.

Examples of the diol include, but are not limited to, ethylene glycol, diethylene glycol, polyethylene glycol, propylene glycol, polypropylene glycol, polybutylene glycol, 1,3-propanediol, 1,4-butanediol, 1,6-hexanediol, neopentyl glycol, polytetramethylene glycol, 1,4-cyclohexanediol, 1,4-cyclohexanedimethanol, and bisphenol A or an alkylene oxide adduct thereof. The polyol having a functionality of 3 or more may be trimethylolpropane, glycerin, pentaerythritol, or the like.

The copolymerization ratios of the polycarboxylic acid or anhydride thereof and the polyol that form the modified polyester-based resin when the total mass of copolymerized components is taken to be 100 mass% are preferably 40 mass% to 60 mass% of the polycarboxylic acid or anhydride thereof and 40 mass% to 60 mass% of the polyol, and are more preferably 45 mass% to 55 mass% of the polycarboxylic acid or anhydride thereof and 45 mass% to 55 mass% of the polyol.

The weight-average molecular weight of the modified polyester-based resin is preferably 3,000 to 100,000, and more preferably 10,000 to 30,000. The weight-average molecular weight is preferably 3,000 or more from a viewpoint of improving bundlability of the glass fiber and is preferably 100,000 or less from a viewpoint of improving emulsification stability when used as a water dispersion.

The polymer and/or thermoplastic resin used as the binding agent may each be just one type thereof used individually or may be two or more types thereof used together.

When the total amount of the binding agent is taken to be 100 mass%, it is preferable to use 50 mass% or more, and more preferable to use 60 mass% or more of one or more polymers selected from a homopolymer of acrylic acid, a copolymer of acrylic acid and another copolymerizable monomer, and a salt of a primary, secondary, or tertiary amine with either of these polymers.

In a case in which the sizing agent is composed of a silane coupling agent and a binding agent, it is preferable that 0.1 mass% to 3 mass%, more preferable that 0.2 mass% to 2 mass%, and even more preferable that 0.2 mass% to 1 mass% of the sizing agent, in terms of total mass of the silane coupling agent and the binding agent, is caused to attach relative to 100 mass% of the glass fiber. The attached amount of the sizing agent in terms of total mass of the silane coupling agent and the binding agent relative to 100 mass% of the glass fiber is preferably 0.1 mass% or more from a viewpoint of controlling bundlability of the glass fiber and improving interfacial adhesive strength and is preferably 3 mass% or less from a viewpoint of yarn handleability.

Moreover, in a case in which the sizing agent is composed of a silane coupling agent, a lubricant, and a binding agent, it is preferable that 0.1 mass% to 3 mass%, more preferable that 0.2 mass% to 2 mass%, and even more preferable that 0.2 mass% to 1 mass% of the sizing agent, in terms of total mass of the silane coupling agent, the lubricant, and the binding agent, is caused to attach relative to 100 mass% of the glass fiber. The attached amount of the sizing agent in terms of total mass of the silane coupling agent, the lubricant, and the binding agent relative to 100 mass% of the glass fiber is

preferably 0.1 mass% or more from a viewpoint of controlling bundlability of the glass fiber and improving interfacial adhesive strength and is preferably 3 mass% or less from a viewpoint of yarn handleability.

(Composition of sizing agent for glass fiber)

The amount of the silane coupling agent that is compounded in the sizing agent for glass fiber is preferably 0.1 mass% to 2 mass%, more preferably 0.1 mass% to 1 mass%, and even more preferably 0.2 mass% to 0.5 mass% from a viewpoint of improving bundlability of the glass fiber and interfacial adhesive strength, and also from a viewpoint of improving mechanical strength of the reinforced composite material.
The amount of the lubricant that is compounded in the sizing agent for glass fiber is preferably 0.01 mass% or more, and more preferably 0.02 mass% or more from a viewpoint of imparting sufficient lubricity, and is preferably 1 mass% or less, and more preferably 0.5 mass% or less from a viewpoint of improving interfacial adhesive strength and improving mechanical strength of the reinforced composite material.
The amount of the binding agent that is compounded in the sizing agent for glass fiber is preferably 1 mass% to 25 mass%, more preferably 3 mass% to 15 mass%, and even more preferably 3 mass% to 10 mass% from a viewpoint of controlling bundlability of the glass fiber and improving interfacial adhesive strength, and also from a viewpoint of improving mechanical strength of the reinforced composite material.
In a case in which glass fiber is used as the reinforcing fiber and in which the sizing agent is composed of a silane coupling agent, a lubricant, and a binding agent, it is preferable that the sizing agent for glass fiber contains 0.1 mass% to 2 mass% of the silane coupling agent, 0.01 mass% to 1 mass% of the lubricant, and 1 mass% to 25 mass% of the binding agent, and it is preferable that these components are diluted with water such that the total mass is adjusted to 100 mass%.

(Mode of use of sizing agent for glass fiber)

The sizing agent for glass fiber may be prepared in any form such as an aqueous solution, a colloidal dispersion, or an emulsion in which an emulsifier is used depending on the mode of use of the sizing agent. However, it is preferable that the sizing agent is used in the form of an aqueous solution from a viewpoint of improving dispersion stability of the sizing agent and improving heat resistance.
Glass fiber serving as the reinforcing fiber forming the reinforced composite material of the present embodiment can be continuously obtained by, in a commonly known glass fiber production process, applying the above-described sizing agent onto glass fiber by a commonly known method such as using a roller-type applicator and drying the glass fiber produced thereby.
In a case in which other reinforcing fiber is used, the type and amount of a sizing agent that can be used for glass fiber or carbon fiber should be selected as appropriate depending on the characteristics of the reinforcing fiber, and the type and amount of the sizing agent are preferably in accordance with those for a sizing agent used for carbon fiber.

<Recovery of reinforcing fiber from reinforced composite material>

A method of recovering reinforcing fiber from a reinforced composite material of the present embodiment is a method of recovering reinforcing fiber from a reinforced composite material containing a resin composition that contains a resin including a dynamic covalent bond that reversibly dissociates and bonds through external stimulus and reinforcing fiber that has a fiber length of 10 mm or more.
The resin composition containing a resin including a dynamic covalent bond that reversibly dissociates and bonds through external stimulus may be the resin composition of the present embodiment set forth above that contains a resin including a monomer unit derived from (A) an acetoacetic acid ester compound including two or more acetoacetic acid ester groups in a molecule and a monomer unit derived from (B) an amine compound including two or more primary amino groups in a molecule, and having a three-dimensional crosslinked structure in which an acetoacetic acid ester group of the (A) acetoacetic acid ester compound and a primary amino group of the (B) amine compound are condensation bonded, or may be a resin composition that contains a resin including a bond forming a dynamic covalent bond other than the above-described VU bond (for example, an ester bond, an imine bond, a carbonate bond, a cyclic acetal bond, a quaternary ammonium salt bond, an oxazoline bond, a spiro orthoester bond, a boric acid ester bond, or a disulfide bond).
The reinforcing fiber can be separated and collected from the reinforced composite material to thereby recycle the reinforced composite material by returning the macromolecular network structure to monomers and chain-shaped low-molecular weight derivatives (i.e., decomposing the resin) through dissociation and bonding reactions of the dynamic covalent bond of the resin.
The method of recovering reinforcing fiber from a reinforced composite material includes immersing the reinforced composite material in a decomposition solution to cause decomposition of the resin, filtering a solution obtained through decomposition of the resin to trap reinforcing fiber, and drying the reinforcing fiber that has been trapped.

When the reinforced composite material is to be immersed in the decomposition solution, it is preferable that a subsequently described pre-treatment method, for example, is adopted in order to cut the reinforced composite material to an appropriate size in advance in accordance with the size of a reaction oven or the like.

The decomposition solution into which the reinforced composite material has been loaded is preferably heated to 25°C to 100°C and stirred in order to accelerate decomposition of the resin.

The decomposition solution should be selected in accordance with the type of dynamic covalent bond in the resin.

In the case of a resin that includes a VU bond or an imine bond as a dynamic covalent bond, the decomposition solution may be a solution obtained by dissolving a low-molecular weight amine compound such as ethylenediamine or benzylamine in a solvent such as N-methylpyrrolidone (NMP), for example.

In the case of a resin that includes an ester bond or a cyclic acetal bond as a dynamic covalent bond, the decomposition solution may be a solution obtained by dissolving a low-molecular weight alcohol such as ethylene glycol in a solvent such as N-methylpyrrolidone (NMP), for example.

In the case of a resin that includes a carbonate bond as a dynamic covalent bond, the decomposition solution may be a hydrochloric acid solution or the like, for example.

Once the resin has decomposed and the resin and reinforcing fiber have been separated from each other, the decomposition solution is filtered using filter paper for a Kiriyama funnel or the like so as to trap the reinforcing fiber. The trapped reinforcing fiber is dried under vacuum at 100°C to 150°C so as to remove decomposition solution attached to the reinforcing fiber, and, in this manner, the reinforcing fiber can be recovered.

The mass proportion of additive matter (residues of additives, etc. contained in the resin composition) attached to the recovered reinforcing fiber is preferably 1.0 mass% or less, more preferably 0.5 mass% or less, and even more preferably 0.1 mass% or less when the recovered reinforcing fiber is taken to be 100 mass%. The presence of less additive matter inhibits adhesion of fibers to each other and formation of bundles through the additive matter and makes it easier to reuse the recovered reinforcing fiber.

(Pre-treatment method)

Since reinforced composite materials typically have a large size or specialized shape, it is preferable that prior to immersion of the reinforced composite material in the decomposition solution, the reinforced composite material is processed by cutting and deformation to obtain a shape and size that are suitable for loading into a reaction oven or the like in order to efficiently recycle the reinforced composite material (i.e., in order to efficiently recover reinforcing fiber from the reinforced composite material).

Conventional reinforced composite materials containing a thermosetting resin or the like have suffered from problems that processing of the reinforced composite material to a suitable shape and size requires significant work such as through cutting using a large cutter and that peeling apart of resin and fiber and severing of fiber may occur after cutting and deformation, thus making subsequent handling difficult. In contrast, in the case of a reinforced composite material that contains a resin composition containing a resin that includes a dynamic covalent bond, it is easy to cause softening of the resin composition in accordance with the temperature, for example, and thus softening of the resin composition enables deformation and cutting with little severing of fiber and with the fiber and resin composition remaining closely adhered, thus facilitating subsequent handling.

The temperature at which the reinforced composite material containing a resin composition that contains a resin including a dynamic covalent bond is softened is preferably not lower than the resin composition bond exchange temperature (Tv) + 10°C and lower than Tv + 100°C. A temperature of lower than Tv + 10°C does not cause sufficient softening of the resin composition and tends to result in fiber severing more easily with greater cutting and deformation. Moreover, a temperature of higher than Tv + 100°C tends to facilitate peeling of the resin composition from the fiber through excessive softening of the resin composition and tends to make handling after deformation difficult.

Note that during softening of the reinforced composite material, the entire reinforced composite material may be heated, or just a face (portion) that is to be deformed and cut may be heated in a localized manner.

<Shaped product>

A shaped product of the present embodiment contains the reinforced composite material of the present embodiment set forth above.

No specific limitations are placed on the method by which the shaped product of the present embodiment is produced. For example, the shaped product of the present embodiment can be produced by a method in which the reinforced composite material of the present embodiment is cut out as a specific size, is heated using an infrared heater or the like, and is subsequently thermocompression pressed using a press forming machine.

EXAMPLES

The following provides a more specific description of the present disclosure through examples. However, the present disclosure is not limited to these examples, and it is needless to say that the present disclosure can be implemented with various modifications that do not deviate from the scope of the essence of the present disclosure.

Measurement methods used in Examples A1 to A37 and Comparative Examples A1 and A2 are as follows.

<Crosslink density and bond exchange temperature Tv>

A test specimen of 7 mm (width) × 40 mm (length) × 1 mm (thickness) was cut out from a film of a resin composition and was measured from 0°C to 200°C at 5°C/min in torsion mode using an ARES-G2 (TA Instruments). The crosslink density n (mol/$m^3$) was determined from the following formula (1) using an arbitrary value at which the dynamic storage modulus E' was flat.

$$n = E'/3RT \cdots (1)$$

(n: crosslink density (mol/$m^3$); E': dynamic storage modulus (Pa); R: gas constant (= 8.31 J/mol·k); T: absolute temperature (k))

Next, a disk shape of 8 mm in diameter by 1 mm in thickness was cut out from the film of the resin composition, and the stress relaxation time was measured at 170°C, 180°C, 190°C, and 200°C. With the initial stress taken as a reference, the relaxation time at which the stress value reached 1/e was taken to be $\tau$ [s]. The logarithm of $\tau$ was taken, was plotted against the reciprocal of the temperature, and fitting was performed by the least-squares method to derive the following relationship formula (2).

$$\mathrm{Log}(\tau) = A + Ea/RT \cdots (2)$$

($\tau$: relaxation time (s); Ea: bond exchange activation energy (J/mol); R: gas constant (= 8.31 J/mol·k); T: absolute temperature (k))

In a relationship formula shown below for the dynamic storage modulus E' of a flat region determined during calculation of crosslink density, the viscosity h, and the relaxation time $\tau$,

$$h = G' \times \tau = E'/3 \times \tau \cdots (3)$$

the relaxation time $\tau_v$ (s) at h = $10^{12}$ (Pa·s) was determined, and a temperature T satisfying $\tau = \tau_v$ in the preceding relationship formula (2) was defined as the bond exchange temperature Tv (°C).

<Glass-transition temperature (Tg)>

A resin composition was subjected to heating from -30°C to 250°C at a heating rate of 10°C/min, subsequent cooling to -30°C at 10°C/min, and subsequent heating at a heating rate of 10°C/min in a nitrogen atmosphere using a differential scanning calorimeter (DSC) (Pyris-1 produced by PerkinElmer, Inc.) to measure the glass-transition temperature Tg (°C).

<Aromatic group content>

A resin composition was introduced into an organic solvent such as THF and was caused to decompose using an aliphatic primary amine or ammonium aqueous solution under conditions of 24 hours or more at 100°C under raised pressure. A UV-vis absorption spectrum of the resultant solution was measured. Benzene was used as a reference substance to prepare a calibration curve at a maximum absorption wavelength of 255 nm. The benzene-equivalent mass in the resin decomposition product determined from this calibration curve was divided by the mass of the resin composition, and the resultant value (mass percent concentration) was defined as the aromatic group content (mass%).

<Mechanical properties (tensile strength and tensile elongation)>

A JIS K7160 type-2 test specimen of 1 mm in thickness was cut out from a film of a resin composition. The test specimen was set in an Instron 5969 (produced by Instron) such that the distance between grips was 20 mm. In a tensile test in which measurement was performed at a rate of 1 mm/min, the maximum stress was taken to be the tensile strength

(MPa) and the maximum elongation was taken to the tensile elongation (%).

<Mechanical properties (bending strength)>

A jig for three-point bending was used in an Instron 5564 (produced by Instron) in order to measure maximum stress as bending stress (MPa) at 23°C, 50% RH, and a test rate of 1 mm/min with the span set to 32 mm. This was performed in accordance with ISO 178 with the exception that a strip-shaped test specimen of 80 mm in length, 10 mm in width, and 2 mm in thickness that had been cut out from a reinforced composite material was used. A largest value among those for three test specimens was taken as a measurement result.

<Formability (ease of pre-treatment)>

A reinforced composite material was deformed to an appropriate shape and size for loading into a reactor in order to recycle the reinforced composite material. The deformation was performed using a metal piece such as scissors that had been heated to approximately 180°C, and the material was cut out as a size of 1 cm × 1 cm × thickness.
The state of peeling and dropping of resin from fiber during this cutting was evaluated by the following evaluation standard.

[Evaluation standard]

A (excellent): The material can easily be cut to the desired size without deformation and without peeling of resin from fiber. In addition, the cross-section after cutting solidifies within 30 seconds, and handling is easy.
B (good): The material can easily be cut to the desired size without deformation and without peeling of resin from fiber. Solidification of the cross-section after cutting requires more than 30 seconds.
C (practically sufficient): The material has high fluidity and deforms during cutting, but peeling of resin from fiber does not occur; or the material has low fluidity and is not easy to cut due to being hard, but scattering of scraps does not occur during cutting, and the fiber surface of a cut section is not roughened.
D (poor): The material has excessively high fluidity and experiences peeling of resin from fiber during cutting; or the material has low fluidity, excessively high hardness, and experiences scattering of scraps during cutting, resulting in roughening of the fiber surface of a cut section.

<Recyclability>

A 10 g sample piece obtained in <Formability (ease of pre-treatment)> described above was heated to 100°C in a mixed solution of 5.0 g of benzylamine and 100 mL of N-methylpyrrolidone, the time taken from the start of heating until visual observation of peeling of resin from fibers and the start of breaking apart of fibers was measured, and this time was taken to be the decomposition time. Recyclability was evaluated by the following evaluation standard based on the decomposition time.

[Evaluation standard]

A (excellent): Decomposition time of less than 2 hours
B (good): Decomposition time of not less than 2 hours and less than 12 hours
C (practically sufficient): Decomposition time of not less than 12 hours and less than 20 hours
D (practically feasible): Decomposition time of not less than 20 hours and less than 36 hours
E (poor): Decomposition time of 36 hours or more; or absence of peeling of resin from fiber

<Interfacial adhesiveness evaluation>

A resin thin film on a glass plate obtained in each of Examples A32 to A37 was used to evaluate interfacial adhesiveness between a fiber surface and a resin surface through a sizing agent.
Cellophane tape was pressed against the resin thin film, and this tape was subsequently peeled off all at once. The condition of peeling of the resin thin film from the glass plate was inspected, and the interfacial adhesiveness was evaluated by the following evaluation standard.

[Evaluation standard]

A (excellent): The resin thin film is not peeled from the glass plate and is not changed at all.
B (good): Some of the resin thin film is peeled off, but 70% or more of the resin thin film by area is adhered to the glass plate.
C (practically sufficient): Some of the resin thin film is peeled off, but not less than 50% and less than 70% of the resin thin film by area is adhered to the glass plate.
D (poor): The majority of the resin thin film is peeled off and less than 50% of the resin thin film by area is adhered to the glass plate

<Surface functional groups of carbon fiber and glass fiber>

An XPS (Versa Probe II produced by Ulvac-Phi, Incorporated) was used to perform measurement of photoelectron extraction angle with an excitation source of mono.AlKα 20 kV × 5 mA 100 W and an analysis size of 100 μm × 1.4 mm. A data processing function of software (MultiPak 9.6.0.15) accompanying the instrument was used to perform quantitative analysis with respect to obtained peaks. In a case in which the relative element concentration (atomic%) for a peak originating from nitrogen relative to all elements was 0.01 or more, an amino group-containing sizing agent was judged to be present at the surfaces of fibers, and the fiber surface functional group was denoted as "Amino group". Likewise, in a case in which the relative element concentration (atomic%) for a peak originating from oxygen was 0.1 or more, a hydroxy group-containing sizing agent was judged to be present at the surfaces of fibers, and the fiber surface functional group was denoted as "Hydroxy group". In a case in which the relative element concentrations (atomic%) of peaks originating from nitrogen and oxygen were respectively less than 0.01 and less than 0.1, an alkyl group-containing sizing agent was judged to be present at the surfaces of fibers, and the fiber surface functional group was denoted as "Alkyl group".

Materials used in Examples A1 to A37 and Comparative Examples A1 and A2 are as follows.

(Raw materials of resins)

• (A) Acetoacetic acid ester compounds

[Raw materials]

Polypropylene glycol, diol-type: PPG-400 produced by FUJIFILM Wako Pure Chemical Corporation
Polypropylene glycol, diol-type: PPG-1000 produced by FUJIFILM Wako Pure Chemical Corporation
Ethylene glycol (EG): Produced by FUJIFILM Wako Pure Chemical Corporation
1,4-Cyclohexanedimethanol (cis-, trans- mixture): Produced by FUJIFILM Wako Pure Chemical Corporation
Dimer diol: Pripol 2033 produced by Croda Japan
1,2,3-Propanetriol: Produced by Tokyo Chemical Industry Co., Ltd.
1,2,4-Butanetriol: Produced by FUJIFILM Wako Pure Chemical Corporation
tert-Butyl acetoacetate: Produced by Tokyo Chemical Industry Co., Ltd.

[Synthesis of acetoacetic acid ester compounds]

[[Synthesis of PPG-400 AA]]

PPG-400 (120 g, 0.3 mol) and tert-butyl acetoacetate (100 g, 0.632 mol) were charged to a 300 mL four-necked flask and were stirred by a stirring blade under Ar flow. Thereafter, heating was performed in an oil bath until the external temperature reached 130°C, and the system was gradually depressurized to 68 hPa. After 4 hours of heating under reduced pressure, the external temperature was set to 130°C and the degree of depressurization was set to 3 hPa so as to remove unreacted tert-butyl acetoacetate. After a further 2 hours of heating under reduced pressure, the flask was left to cool to room temperature, and then a bisacetoacetic acid PPG ester (PPG_400 AA) inside the flask was recovered (recovered amount: 164 g; yield: 96%).

[[Synthesis of other acetoacetic acid ester compounds]]

PPG_1000 AA, EGAA, CDMAA, Pripol AA, 1,2,3-propanetriol AA, and 1,2,4-butanetriol AA were synthesized in the same way as PPG-400 AA with the exception that the type of polyol and the charged amounts (mol ratio) were changed as indicated in Table 1.

[Table 1]

| Acetoacetic acid ester compound | Polyol | Polyol/tert-butyl acetoacetate ratio [mol/mol] |
|---|---|---|
| PPG_400 AA | PPG-400 | 1/2.1 |
| PPG_1000 AA | PPG-1000 | 1/2.1 |
| EGAA | Ethylene glycol (EG) | 1/2.1 |
| CDMAA | 1,4-Cyclohexanedimethanol | 1/2.1 |
| Pripol AA | Pripol 2033 | 1/2.1 |
| 1,2,3-Propanetriol AA | 1,2,3-Propanetriol | 1/2.1 |
| 1,2,4-Butanetriol AA | 1,2,4-Butanetriol | 1/2.1 |

• (B) Amine compounds

Hexamethylenediamine (HMDA): Produced by Tokyo Chemical Industry Co., Ltd.
m-Xylenediamine (MXDA): Produced by Tokyo Chemical Industry Co., Ltd.
4,4-Methylenebis(cyclohexylamine) (MBCA): Produced by FUJIFILM Wako Pure Chemical Corporation
1,8-Octanediamine: Produced by FUJIFILM Wako Pure Chemical Corporation
Trimethylhexamethylenediamine (2,2,4-, 2,4,4- mixture) (TMHMDA): Produced by Tokyo Chemical Industry Co., Ltd.
Diamine compound: Priamine 1074 produced by Croda Japan
Trimethylolpropane poly(oxypropylene)triamine: JEFFAMINE T-403 produced by Huntsman Corporation
Tris(2-aminoethyl)amine (TREN): Produced by Tokyo Chemical Industry Co., Ltd.

• Solvent

Ethanol: Produced by Kanto Chemical Co., Inc.

(Decomposition solution)

Benzylamine: Produced by Tokyo Chemical Industry Co., Ltd.
N-Methylpyrrolidone: Produced by Tokyo Chemical Industry Co., Ltd.

(Reinforcing fiber)

Carbon fiber cloth 1 (CF1): Carbon fiber having a monofilament count of 12,000 and a fiber length of 10 mm or more with a single fiber fineness of 0.4 dtex was produced and was subsequently woven (plain woven) using a rapier loom (weave density: 6.5 strands/25 mm; basis weight: 255 g/$m^2$). A sizing agent containing polyurethane was used.

Carbon fiber cloth 2 (CF2): Carbon fiber having a monofilament count of 12,000 and a fiber length of 10 mm or more with a single fiber fineness of 0.6 dtex was produced and was subsequently woven (plain woven) using a rapier loom (weave density: 6.5 strands/25 mm; basis weight: 380 g/$m^2$). A sizing agent containing polyurethane was used.

Carbon fiber cloth 3 (CF3): Carbon fiber having a monofilament count of 12,000 and a fiber length of 10 mm or more with a single fiber fineness of 1.0 dtex was produced and was subsequently woven (plain woven) using a rapier loom (weave density: 6.5 strands/25 mm; basis weight: 620 g/$m^2$). A sizing agent containing polyurethane was used.

Carbon fiber cloth 4 (CF4): Carbon fiber having a monofilament count of 10,000 and a fiber length of 10 mm or more with a single fiber fineness of 1.8 dtex was produced and was subsequently woven (plain woven) using a rapier loom (weave density: 4 strands/25 mm; basis weight: 580 g/$m^2$). A sizing agent containing polyurethane was used.

Carbon fiber cloth 5 (CF5): Carbon fiber having a monofilament count of 12,000 and a fiber length of 10 mm or more with a single fiber fineness of 0.4 dtex was produced and was subsequently woven (plain woven) using a rapier loom (weave density: 6.5 strands/25 mm; basis weight: 255 g/$m^2$). An epoxy resin that did not include an amino group was used as a sizing agent.

Glass cloth 1 (GF1): Glass fiber having a monofilament count of 2,000 and a fiber length of 10 mm or more with a single fiber fineness of 6.4 dtex was produced with 0.10 mass% of a sizing agent adhered thereto relative to 100 mass% of the glass fiber. The winding configuration was DWR, and the average monofilament diameter was approximately 18 $\mu$m. The sizing agent was prepared such as to contain 1.5 mass% of $\gamma$-aminopropyltriethoxysilane (KBE-903 produced by Shin-Etsu Chemical, Co., Ltd.) as a coupling agent, 1 mass% of carnauba wax as a lubricant, and 3 mass% of a copolymerized compound (copolymerized compound having a weight-average molecular weight of 10,000 that was obtained through copolymerization of 50 mass% of maleic anhydride and 50 mass% of methyl methacrylate) as a bundling agent through adjustment with deionized water. The glass fiber was woven as warp and weft to produce glass cloth (GF1). The weaving configuration of the obtained glass cloth was plain weave with a weave density of 6.1 strands/25 mm and a basis weight of 640 g/$m^2$.

Glass cloth 2 (GF2): Glass cloth (GF2) was produced by performing operations in the same way as for GF1 and weaving glass fiber as warp and weft with the exception that glass fiber having a monofilament count of 2,000 and a fiber length of 10 mm or more with a single fiber fineness of 8.0 dtex was used and that the average monofilament diameter was set as approximately 20 $\mu$m. The weaving configuration of the obtained glass cloth was plain weave with a weave density of 5.0 strands/25 mm and a basis weight of 640 g/$m^2$.

Glass cloth 3 (GF3): Glass cloth (GF3) was produced by performing operations in the same way as for GF1 and weaving glass fiber as warp and weft with the exception that glass fiber having a monofilament count of 2,000 and a fiber length of 10 mm or more with a single fiber fineness of 1.5 dtex was used and that the average monofilament diameter was set as approximately 9 $\mu$m. The weaving configuration of the obtained glass cloth was plain weave with a weave density of 6.5 strands/25 mm and a basis weight of 150 g/$m^2$.

Glass cloth 4 (GF4): Glass cloth (GF) was produced by performing operations in the same way as for GF1 and weaving glass fiber as warp and weft with the exception that glass fiber having a monofilament count of 2,000 and a fiber length of 10 mm or more with a single fiber fineness of 3.0 dtex was used and that the average monofilament diameter was set as approximately 9 $\mu$m. The weaving configuration of the obtained glass cloth was plain weave with a weave density of 6.5 strands/25 mm and a basis weight of 312 g/$m^2$.

Glass cloth 5 (GF5): Glass fiber having a monofilament count of 2,000 and a fiber length of 10 mm or more with a single fiber fineness of 6.4 dtex was produced with 0.10 mass% of a sizing agent attached thereto relative to 100 mass% of the glass fiber. The winding configuration was DWR, and the average monofilament diameter was approximately 18 $\mu$m. The sizing agent was prepared such as to contain 1.5 mass% of 3-mercaptopropyltrimethoxysilane (KBE-803 produced by Shin-Etsu Chemical, Co., Ltd.) as a coupling agent, 1 mass% of carnauba wax as a lubricant, and 3 mass% of a copolymerized compound (copolymerized compound having a weight-average molecular weight of 10,000 that was obtained through copolymerization of 50 mass% of maleic anhydride and 50 mass% of methyl methacrylate) as a bundling agent through adjustment with deionized water. The glass fiber was woven as warp and weft to produce glass cloth (GF5). The weaving configuration of the obtained glass cloth was plain weave with a weave density of 6.1 strands/25 mm and a basis weight of 640 g/$m^2$.

[Example A1]

(Synthesis of resin and production of film)

Tris(2-aminoethyl)amine (TREN) (1.3 g) and 4,4-methylenebis(cyclohexylamine) (MBCA) (1.9 g) were dissolved in ethanol (2.5 mL). A bisacetoacetic acid compound of ethylene glycol (EGAA) (4.9 g) was added to and stirred with this solution to cause a condensation reaction and yield a resin. Thereafter, drying was performed at 80°C for 2 hours and at 160°C for 4 hours in a vacuum dryer.

The resultant resin was pulverized and was then pressed for 25 minutes using a heat-press machine (temperature setting: 160°C; pressure setting: 3 MPa) to obtain a film of 60 mm $\times$ 60 mm $\times$ 1 mm (thickness). Test specimens were cut out from this film and were subjected to various measurements.

(Synthesis of resin and production of reinforced composite material)

Tris(2-aminoethyl)amine (TREN) (2.9 g) and 4,4-methylenebis(cyclohexylamine) (MBCA) (4.2 g) were dissolved in ethanol (24.4 mL). A bisacetoacetic acid compound of ethylene glycol (EGAA) (11.0 g) was added to and stirred with this solution. The resultant solution was used to impregnate a carbon fiber cloth 1 that had been cut to a size of 210 mm $\times$ 210 mm. After air drying overnight, drying was performed at 80°C for 2 hours and at 160°C for 4 hours in a vacuum dryer.

Thereafter, the impregnated carbon fiber cloth 1 was cut to a size of 90 mm × 60 mm, and then 5 pieces were overlapped with one another and were pressed for 25 minutes by heat pressing (temperature setting: 160°C; pressure setting: 3 MPa) to obtain a continuous carbon fiber-reinforced composite material having a thickness of 2 mm.

(Decomposition of reinforced composite material)

In a mixed solution of 8 g of benzylamine and 65 mL of N-methylpyrrolidone, 1 g of the continuous carbon fiber-reinforced composite material obtained by the above-described method was heated at 100°C for a specific time and was then removed from the solution. N-methylpyrrolidone solution attached to the continuous carbon fiber-reinforced composite material was removed through vacuum drying at 100°C, and then the mass of the continuous carbon fiber-reinforced composite material was measured. The mass of carbon fiber after decomposition treatment was 500 mg. It was possible to recover carbon fiber without the visible presence of residual resin.

[Examples A2 to A23 and A25 to A31]

(Synthesis of resin and production of film and reinforced composite material)

Synthesis of a resin and production of a film and a reinforced composite material were performed in the same way as in Example A1 with the exception that the charged amounts (mol ratios) of the acetoacetic acid ester compound and amine compound and the type of reinforcing fiber were changed as indicated in Tables 2 to 5.

(Decomposition of reinforced composite material)

Decomposition of the reinforced composite material was performed in the same way as in Example A1. The recovery rate (%) of reinforcing fiber is shown in Tables 2 to 5.

[Example A24]

(Synthesis of resin and production of film)

Synthesis of a resin and production of a film were performed in the same way as in Example A1 with the exception that the charged amounts (mol ratios) of the acetoacetic acid ester compound and amine compound were changed as indicated in Table 4.

(Synthesis of resin and production of reinforced composite material)

A resin was obtained with the charged amounts (mol ratios) of the acetoacetic acid ester compound and amine compound changed as indicated in Table 4. With the type of reinforcing fiber changed as indicated in Table 4, 51 g of the obtained resin was pulverized by a pulverizer and was uniformly blended with 65 g of short fiber carbon fiber (Carbon Chopped Fiber produced by Mitsubishi Chemical Corporation; fiber length: 3 mm). The blended product was loaded into a metal mold of 200 mm × 200 mm × 2 mm (thickness) and was pressed for 25 minutes by heat pressing (temperature setting: 160°C; pressure setting: 3 MPa) to obtain a uniform continuous carbon fiber-reinforced composite material.

(Decomposition of reinforced composite material)

Decomposition of the reinforced composite material was performed in the same way as in Example A1. The recovery rate (%) of reinforcing fiber is shown in Table 4.

[Comparative Example A1]

(Synthesis of resin and production of film)

Polypropylene glycol #400 diglycidyl ether (EPOLIGHT 400P produced by Kyoeisha Chemical Co., Ltd.) (3.7 g) was dissolved in 10 mL of methanol and was heated to 65°C to cause dissolution. A solution obtained by dissolving JEFFAMINE T-403 (2.0 g) in 5 mL of methanol was added to and stirred with this solution, and then the mixture was poured into a metal mold of 60 mm × 60 mm × 1 mm (thickness). Curing was performed at normal temperature, and then drying was performed at 80°C for 2 hours and at 160°C for 4 hours in a vacuum dryer to obtain a film of 60 mm × 60 mm × 1 mm (thickness). Test specimens were cut out from this film and were subjected to various measurements.

(Synthesis of resin and production of reinforced composite material)

Polypropylene glycol #400 diglycidyl ether (EPOLIGHT 400P produced by Kyoeisha Chemical Co., Ltd.) (11 g) was dissolved in 10 mL of methanol and was heated to 65°C to cause dissolution. A solution obtained by dissolving JEFFAMINE T-403 (6.0 g) in 5 mL of methanol was added to and stirred with this solution to yield a resin.

The obtained resin was uniformly poured onto a carbon fiber cloth 1 that had been cut to a size of 210 mm × 210 mm and had been preheated to 50°C in an oven. A pressing roller was used to perform uniform pressing and impregnation. The carbon fiber cloth 1 that had been impregnated with the resin was heated at 60°C for 30 minutes, and was subsequently heated at 90°C for 30 minutes and under reduced pressure at 170°C for 1 hour to obtain a continuous carbon fiber-reinforced composite material.

(Decomposition of reinforced composite material)

In a mixed solution of 8 g of benzylamine and 65 mL of N-methylpyrrolidone, 1 g of the continuous carbon fiber-reinforced composite material obtained by the above-described method was heated at 100°C for 10 minutes and was then removed from the solution. N-methylpyrrolidone solution attached to the continuous carbon fiber-reinforced composite material was removed through drying at 100°C, and then the mass of the continuous carbon fiber-reinforced composite material was measured. It was not possible to remove the resin or to recover carbon fiber.

[Comparative Example A2]

(Synthesis of resin and production of film)

Glycerol triglycidyl ether (3.3 g) was dissolved in 10 mL of methanol and was heated to 65°C to cause dissolution. A solution obtained by dissolving hexamethylenediamine (2.2 g) in 5 mL of methanol was added to and stirred with this solution, and then the mixture was poured into a metal mold of 60 mm × 60 mm × 1 mm (thickness). Curing was performed at normal temperature, and then drying was performed at 80°C for 2 hours and at 160°C for 4 hours in a vacuum dryer to obtain a film of 60 mm × 60 mm × 1 mm (thickness). Test specimens were cut out from this film and were subjected to various measurements.

(Synthesis of resin and production of reinforced composite material)

Glycerol triglycidyl ether (10.1 g) was dissolved in 10 mL of methanol and was heated to 65°C to cause dissolution. A solution obtained by dissolving hexamethylenediamine (6.8 g) in 5 mL of methanol was added to and stirred with this solution to yield a resin.

The obtained resin was uniformly poured onto a carbon fiber cloth 1 of 210 mm × 210 mm that had been preheated to 50°C in an oven. A pressing roller was used to perform uniform pressing and impregnation. The carbon fiber cloth 1 that had been impregnated with the resin was heated at 60°C for 30 minutes, and was subsequently heated at 90°C for 30 minutes and under reduced pressure at 170°C for 1 hour to obtain a continuous carbon fiber-reinforced composite material.

(Decomposition of reinforced composite material)

In a mixed solution of 8 g of benzylamine and 65 mL of N-methylpyrrolidone, 1 g of the continuous carbon fiber-reinforced composite material obtained by the above-described method was heated at 100°C for 10 minutes and was then removed from the solution. N-methylpyrrolidone solution attached to the continuous carbon fiber-reinforced composite material was removed through drying at 100°C, and then the mass of the continuous carbon fiber-reinforced composite material was measured. It was not possible to remove the resin or to recover carbon fiber.

[Table 2]

| | | | | Example A1 | Example A2 | Example A3 | Exampe A4 | Example A5 | Example A6 | Example A7 | Example A8 |
|---|---|---|---|---|---|---|---|---|---|---|---|
| Materials and compositions | (A) Acetoacetic acid ester compound | Difunctional | - | EGAA | EGAA | EGAA | EGAA | EGAA | EGAA | PPG_400 AA | - |
| | | | mol ratio | 21.2 | 21.2 | 21.2 | 21.2 | 8.5 | 8.9 | 11 | - |
| | | Trifunctional | - | - | - | - | - | 1,2,3-Propanetriol AA | 1,2,4-Butanetriol AA | - | 1,2,3-Propanetriol AA |
| | | | mol ratio | - | - | - | - | 8.5 | 8.9 | - | 17.6 |
| | (B) Amine compound | Difunctional | - | MBCA | 1,8-Octanediamine | TMHMDA | TMHMDA | TMHMDA | HMDA | - | HMDA |
| | | | mol ratio | 8.9 | 8.9 | 8.9 | 8.9 | 8.9 | 23.4 | - | 32.2 |
| | | Trifunctional | - | TREN | TREN | TREN | T-403 | TREN | - | T-403 | - |
| | | | mol ratio | 8.9 | 8.9 | 8.9 | 8.9 | 8.9 | - | 8.9 | - |
| | Glycidyl ether | Difunctional | - | - | - | - | - | - | - | - | - |
| | | | - | - | - | - | - | - | - | - | - |
| | | Trifunctional | - | - | - | - | - | - | - | - | - |
| | | | | | | | | | | | |
| | Continuous reinforcing fiber | | - | CF1 | CF1 | CF1 | CF1 | CF1 | CF1 | CF1 | CF1 |
| | Acetoacetic acid trifunctional/difunctional ratio | | mol/mol | - | - | - | - | 50/50 | 50/50 | - | - |
| | Amine trifunctional/difunctional ratio | | mol/mol | 50/50 | 50/50 | 50/50 | 50/50 | 50/50 | - | - | - |
| | Amino groups/acetoacetic acid ester groups | | mol/mol | 1.05 | 1.05 | 1.05 | 1.05 | 1.05 | 1.05 | 1.2 | 1.22 |

(continued)

| | | | Example A1 | Example A2 | Example A3 | Exampe A4 | Example A5 | Example A6 | Example A7 | Example A8 |
|---|---|---|---|---|---|---|---|---|---|---|
| Measurements and evaluations | Tg | °C | 58.1 | 41.6 | 42 | 39 | 41 | 38 | -15 | 60 |
| | Tv | °C | 123 | 110 | 109 | 110 | 118 | 109 | 89 | 83 |
| | Tv - Tg | °C | 64.9 | 68.4 | 67 | 71 | 77 | 71 | 104 | 23 |
| | Crosslink density | mol/m$^3$ | 989 | 626 | 877 | 919 | 1170 | 698 | 267 | 1534 |
| | Aromatic group content | Mass% | 0 | 0 | 0 | 0 | 0 | 0 | 0 | 0 |
| | Fiber surface functional group | - | Amino group | Amino group | Amino group | Amino group | Amino group | Amino group | Amino group | Amino group |
| | Stress relaxation time τ (180°C) | s | 1192 | 742 | 812 | 809 | 1130 | 1090 | 981 | 1320 |
| | Mechanical properties (tensile strength) | MPa | 67 | 59 | 48 | 35 | 57 | 53 | 1.8 | 69 |
| | Mechanical properties (tensile elongation) | % | 4 | 9 | 10 | 14 | 6 | 10 | 30 | 2 |
| | Formability (ease of pretreatment) | - | A | B | B | B | A | A | B | A |
| | Recyclability (decomposition time) | hr | 4 | 3 | 3 | 2 | 4 | 3 | 1.5 | 5 |
| | | - | B | B | B | B | B | B | A | B |
| | Recovery rate of reinforcing fiber | % | 90 | 90 | 90 | 90 | 90 | 90 | 90 | 90 |

[Table 3]

| | | | | Example A9 | Example A10 | Example A11 | Example A12 | Example A13 | Example A14 | Example A15 | Example A16 | Example A17 | Example A18 | Example A19 | Example A20 |
|---|---|---|---|---|---|---|---|---|---|---|---|---|---|---|---|
| Materials and compositions | (A) Acetoacetic acid ester compound | Difunctional | - | EGAA | PPG_400 AA | EGAA | EGAA | EGAA | EGAA | EGAA | CDMAA | CDMAA | Pripol AA | EGAA | EGAA |
| | | | mol ratio | 21.2 | 17 | 8.9 | 25.7 | 25.7 | 25.7 | 25.7 | 21.2 | 25.4 | 21.2 | 21.2 | 21.2 |
| | | Trifunctional | - | - | - | 1,2,3-Propanetriol AA | - | - | - | - | - | - | - | - | - |
| | | | mol ratio | - | - | - | - | - | - | - | - | - | - | - | - |
| | (B) Amine compound | Difunctional | - | HMDA | - | HMDA | HMDA | HMDA | HMDA | HMDA | MXDA | MXDA | Priamine 1074 | HMDA | HMDA |
| | | | mol ratio | 8.9 | - | 23.4 | 10.2 | 9.5 | 8.2 | 5.4 | 8.9 | 13.4 | 8.9 | 8.9 | 8.9 |
| | | | - | - | - | - | MXDA | MXDA | MXDA | MXDA | - | - | - | - | - |
| | | | mol ratio | - | - | - | 0.7 | 1.4 | 2.7 | 5.4 | - | - | - | - | - |
| | | Trifunctional | - | TREN | TREN | - | TREN | TREN | TREN | TREN | TREN | TREN | TREN | TREN | TREN |
| | | | mol ratio | 8.9 | 11.9 | - | 10.8 | 10.8 | 10.8 | 10.8 | 8.9 | 8.9 | 8.9 | 8.9 | 8.9 |
| | Glycidyl ether | Difunctional | - | - | - | - | - | - | - | - | - | - | - | - | - |
| | | | - | - | - | - | - | - | - | - | - | - | - | - | - |
| | | Trifunctional | - | - | - | - | - | - | - | - | - | - | - | - | - |
| | | | - | - | - | - | - | - | - | - | - | - | - | - | - |
| | Continuous reinforcing fiber fiber | | - | CF1 | CF1 | CF1 | CF1 | CF1 | CF1 | CF1 | CF1 | CF1 | CF1 | GF1 | CF2 |
| | Acetoacetic acid trifunctional/-difunctional ratio | | mol/mol | - | - | 50/50 | - | - | - | - | - | - | - | - | - |
| | Amine trifunctional/difunctional ratio | | mol/mol | 50/50 | - | - | 50/50 | 50/50 | 50/50 | 50/50 | 50/50 | 40/60 | 50/50 | 50/50 | 50/50 |
| | Amino groups/acetoacetic acid ester groups | | mol/mol | 1.05 | 1.05 | 1.05 | 1.05 | 1.05 | 1.05 | 1.05 | 1.05 | 1.05 | 1.05 | 1.05 | 1.05 |

(continued)

| | | | Example A9 | Example A10 | Example A11 | Example A12 | Example A13 | Example A14 | Example A15 | Example A16 | Example A17 | Example A18 | Example A19 | Example A20 |
|---|---|---|---|---|---|---|---|---|---|---|---|---|---|---|
| Measurements and evaluations | Tg | °C | 41 | -13 | 36.1 | 43.8 | 45.4 | 46.2 | 50.7 | 90 | 67 | -22 | 41 | 41 |
| | Tv | °C | 108 | 116 | 130 | 109 | 110 | 114 | 117 | 109 | 125 | 104 | 108 | 108 |
| | Tv- Tg | °C | 67 | 129 | 93.9 | 65.2 | 64.6 | 67.8 | 66.3 | 19 | 58 | 126 | 67 | 67 |
| | Crosslink density | $mol/m^3$ | 514 | 310 | 605 | 783 | 785 | 786 | 805 | 1489 | 1210 | 240 | 514 | 514 |
| | Aromatic group content | Mass% | 0 | 0 | 0 | 0.59 | 1.2 | 2.3 | 4.5 | 8.5 | 9.5 | 0 | 0 | 0 |
| | Fiber surface functional group | - | Amino group | Amino group | Amino group | Amino group | Amino group | Amino group | Amino group | Amino group | Amino group | Amino group | Amino group | Amino group |
| | Stress relaxation time τ (180°C) | s | 869 | 1132 | 2242 | 855 | 845 | 838 | 819 | 951 | 981 | 489 | 869 | 869 |
| | Mechanical properties (tensile strength) | MPa | 45 | 0.5 | 50 | 46 | 48 | 51 | 59 | 84 | 90 | 1.1 | 45 | 45 |
| | Mechanical properties (tensile elongation) | % | 13 | 32.1 | 15 | 10 | 11 | 12 | 9 | 2 | 3 | 39 | 13 | 13 |
| | Formability (ease of pre-treatment) | - | B | B | A | B | B | B | B | B | B | D | B | B |
| | Recyclability (decomposition time) | hr | 3.5 | 1.5 | 3.5 | 3.5 | 3.7 | 4 | 8 | 12 | 18 | 3.5 | 3.5 | 4.5 |
| | | - | B | A | B | B | B | B | B | C | C | B | B | B |
| | Recovery rate of reinforcing fiber | % | 90 | 90 | 90 | 90 | 90 | 90 | 90 | 90 | 90 | 90 | 95 | 90 |

[Table 4]

| | | | | Example A21 | Example A22 | Example A23 | Example A24 | Comparative Example A1 | Comparative Example A2 |
|---|---|---|---|---|---|---|---|---|---|
| Materials and compositions | (A) Acetoacetic acid ester compound | Difunctional | - | EGAA | PPG_1000 AA | CDMAA | EGAA | - | - |
| | | | mol ratio | 27.3 | 21.2 | 32.5 | 21.2 | - | - |
| | | Trifunctional | - | - | - | - | - | - | - |
| | | | mol ratio | - | - | - | - | - | - |
| | (B) Amine compound | Difunctional | - | MBCA | HMDA | MXDA | HMDA | - | HMDA |
| | | | mol ratio | 2.0 | 8.9 | 20.8 | 8.9 | - | 13.4 |
| | | Trifunctional | - | TREN | TREN | TREN | TREN | T-403 | - |
| | | | mol ratio | 17.8 | 8.9 | 8.9 | 8.9 | 8.9 | - |
| | Glycidyl ether | Difunctional | | | - | - | - | EPOLIGHT 400P | - |
| | | | - | - | - | - | - | 13.4 | - |
| | | Trifunctional | - | - | - | - | - | - | Glycerol triglycidyl ether |
| | | | - | - | - | - | - | - | 8.9 |
| | Continuous reinforcing fiber | | - | CF1 | CF1 | CF1 | Short fiber CF | CF1 | CF1 |
| | Acetoacetic acid trifunctional/difunctional ratio | | mol/mol | - | - | - | - | - | - |
| | Amine trifunctional/difunctional ratio | | mol/mol | 90/10 | 50/50 | 30/70 | 50/50 | - | - |
| | Amino groups/acetoacetic acid ester groups | | mol/mol | 1.05 | 1.05 | 1.05 | 1.05 | - | - |

(continued)

| | | | Example A21 | Example A22 | Example A23 | Example A24 | Comparative Example A1 | Comparative Example A2 |
|---|---|---|---|---|---|---|---|---|
| Measurements and evaluations | Tg | °C | 83 | -15 | 69 | 41 | -12 | 50 |
| | Tv | °C | 112 | 105 | 128 | 108 | - | - |
| | Tv- Tg | °C | 29 | 120 | 59 | 67 | - | - |
| | Crosslink density | mol/$m^3$ | 2479 | 110 | 1157 | 514 | 1200 | 2356 |
| | Aromatic group content | Mass% | 0 | 0 | 11 | 0 | Not measurable | Not measurable |
| | Fiber surface functional group | - | Amino group | Amino group | Amino group | Amino group | Amino group | Amino group |
| | Stress relaxation time $\tau$ (180°C) | S | 917 | 379 | 942 | 869 | Not measurable | Not measurable |
| | Mechanical properties (tensile strength) | MPa | 95 | 0.5 | 78 | 45 | 1.2 | 46 |
| | Mechanical properties (tensile elongation) | % | 3 | 36 | 3 | 13 | 16 | 9 |
| | Formability (ease of pre- treatment) | - | C | D | B | B | D | D |
| | Recyclability (decomposition time) | hr | 20 | 3 | 30 | 3.5 | - | - |
| | | - | D | B | D | B | E | E |
| | Recovery rate of reinforcing fiber | % | 90 | 90 | 90 | 60 | - | - |

[Table 5]

| | | | | Example A25 | Example A26 | Example A27 | Example A28 | Example A29 | Example A30 | Example A31 |
|---|---|---|---|---|---|---|---|---|---|---|
| Materials and compositions | (A) Acetoacetic acid ester compound | Difunctional | - | EGAA | EGAA | EGAA | EGAA | EGAA | EGAA | EGAA |
| | | | mol ratio | 21.2 | 21.2 | 21.2 | 21.2 | 21.2 | 21.2 | 21.2 |
| | | Trifunctional | - | - | - | - | - | - | - | - |
| | | | mol ratio | - | - | - | - | - | - | - |
| | (B) Amine compound | Difunctional | - | HMDA | HMDA | HMDA | HMDA | HMDA | HMDA | HMDA |
| | | | mol ratio | 8.9 | 8.9 | 8.9 | 8.9 | 8.9 | 8.9 | 8.9 |
| | | Trifunctional | - | TREN | TREN | TREN | TREN | TREN | TREN | TREN |
| | | | mol ratio | 8.9 | 8.9 | 8.9 | 8.9 | 8.9 | 8.9 | 8.9 |
| | Glycidyl ether | Difunctional | - | - | - | - | - | - | - | - |
| | | | | | | | | | | |
| | | Trifunctional | | | | | | | | |
| | | | | | | | | | | |
| | Continuous reinforcing fiber | | - | CF3 | CF4 | CF5 | GF3 | GF4 | GF2 | GF5 |
| | Acetoacetic acid trifunctional/difunctional ratio | | mol/mol | - | - | - | - | - | - | - |
| | Amine trifunctional/difunctional ratio | | mol/mol | 50/50 | 50/50 | 50/50 | 50/50 | 50/50 | 50/50 | 50/50 |
| | Amino groups/acetoacetic acid ester groups | | mol/mol | 1.05 | 1.05 | 1.05 | 1.05 | 1.05 | 1.05 | 1.05 |

(continued)

| | | | Example A25 | Example A26 | Example A27 | Example A28 | Example A29 | Example A30 | Example A31 |
|---|---|---|---|---|---|---|---|---|---|
| Measurements and evaluations | Tg | °C | 41 | 41 | 41 | 41 | 41 | 41 | 41 |
| | Tv | °C | 108 | 108 | 108 | 108 | 108 | 108 | 108 |
| | Tv - Tg | °C | 67 | 67 | 67 | 67 | 67 | 67 | 67 |
| | Crosslink density | mol/$m^3$ | 514 | 514 | 514 | 514 | 514 | 514 | 514 |
| | Aromatic group content | Mass% | 0 | 0 | 0 | 0 | 0 | 0 | 0 |
| | Fiber surface functional group | - | Amino group | Amino group | Alkyl group | Amino group | Amino group | Amino group | Alkyl group |
| | Stress relaxation time $\tau$ (180°C) | s | 869 | 869 | 869 | 869 | 869 | 869 | 869 |
| | Mechanical properties (tensile strength) | MPa | 45 | 45 | 45 | 45 | 45 | 45 | 45 |
| | Mechanical properties (tensile elongation) | % | 13 | 13 | 13 | 13 | 13 | 13 | 13 |
| | Formability (ease of pre-treatment) | - | B | B | B | A | B | B | B |
| | Recyclability (decomposition time) | hr | 5 | 6 | 10 | 2 | 3 | 6 | 9 |
| | | - | B | B | B | B | B | B | B |
| | Recovery rate of reinforcing fiber | % | 91 | 90 | 90 | 95 | 90 | 89 | 95 |

[Examples A32 to A37]

(Synthesis of resin and production of film)

A sizing agent described below was used to perform surface treatment of a glass plate as indicated in Table 6. Next, tris(2-aminoethyl)amine (TREN) (1.3 g), hexamethylenediamine (HMDA) (1.0 g), and a bisacetoacetic acid compound of ethylene glycol (EGAA) (5.1 g) were dissolved in acetone (7.6 mL). Approximately 0.5 mL of the resultant solution was dripped onto the glass plate that had undergone surface treatment and was vacuum dried at 150°C for 4 hours or more to produce a resin thin film on the glass plate.

(Sizing agents)

- Amino silane (γ-aminopropyltrimethoxysilane produced by Shin-Etsu Chemical, Co., Ltd.)
- Polyamide (H005FA produced by Arkema)
- Polyurethane (SUPERFLEX 300 produced by DKS Co., Ltd.)
- Epoxy 1: Produced using bisphenol A-type liquid epoxy resin as a main ingredient and a curing agent including an amino group as a curing agent
- Epoxy 2: Produced using bisphenol A-type liquid epoxy resin as a main ingredient and a curing agent including an acid anhydride as a curing agent

Note that the area of the obtained resin thin film was roughly the same in each example.

[Table 6]

| | | | | Example A32 | Example A33 | Example A34 | Example A35 | Example A36 | Example A37 |
|---|---|---|---|---|---|---|---|---|---|
| Materials and compositions | (A) Acetoacetic acid ester compound | Difunctional | - | EGAA | EGAA | EGAA | EGAA | EGAA | EGAA |
| | | | mol ratio | 21.2 | 21.2 | 21.2 | 21.2 | 21.2 | 21.2 |
| | | Trifunctional | - | - | - | - | - | - | - |
| | | | mol ratio | - | - | - | - | - | - |
| | (B) Amine compound | Difunctional | - | HMDA | HMDA | HMDA | HMDA | HMDA | HMDA |
| | | | mol ratio | 8.9 | 8.9 | 8.9 | 8.9 | 8.9 | 8.9 |
| | | Trifunctional | - | TREN | TREN | TREN | TREN | TREN | TREN |
| | | | mol ratio | 8.9 | 8.9 | 8.9 | 8.9 | 8.9 | 8.9 |
| | Sizing agent | | - | Amino silane | Polyamide | Polyurethane | Epoxy 1 | Epoxy 2 | None |
| | Amine trifunctional/difunctional ratio | | mol/mol | 50/50 | 50/50 | 50/50 | 50/50 | 50/50 | 50/50 |
| | Amino groups/acetoacetic acid ester groups | | mol/mol | 1.05 | 1.05 | 1.05 | 1.05 | 1.05 | 1.05 |
| Measurements and evaluations | Interfacial adhesiveness | Evaluation | - | A | B | B | B | C | D |
| | | Adhesion area with glass | % | 100 | 90 | 90 | 80 | 60 | 10 |
| | Fiber surface functional group | | - | Amino group | Amino group | Amino group | Amino group | Hydroxy group | - |

Measurement methods used in Examples B1 to B10 and Comparative Examples B1 and B2 are as follows.

<Bending strength>

A strip-shaped test specimen (100 mm (length) × 10 mm (width) × 2 mm (thickness)) was cut out from a reinforced composite material. The bending strength (MPa) of the test specimen was measured in accordance with ISO 178 under the following measurement conditions using a jig for three-point bending in an Instron Universal Testing Machine 50 kN (produced by Instron). An average value for three test specimens was taken as a measurement result.

- Flexural elastic modulus: Tangent method
- Test environment: 23°C, 50%RH
- Testing rate: 1 mm/min
- Span: Test specimen thickness × 16 mm

<Resin decomposition time through decomposition solution>

A 10 g test specimen was cut out from a reinforced composite material and was heated at 80°C in a decomposition solution indicated in Table 8 in accordance with the type of resin (type of dynamic covalent bond of the resin). The time taken from the start of heating until visual observation of peeling of resin from fibers and the start of breaking apart of fibers was measured and was taken to be the decomposition time (units: hr).
Materials used in Examples B1 to B10 and Comparative Examples B1 and B2 are as follows.

(Sizing agents)

- Sizing agent for amino group introduction: γ-Aminopropyltrimethoxysilane (KBM-903 produced by Shin-Etsu Chemical Co., Ltd.)
- Sizing agent for hydroxy group introduction: 3-Glycidoxypropylmethyldimethoxysilane (KBM-402 produced by Shin-Etsu Chemical Co., Ltd.)
- Sizing agent for thiol group introduction: 3-Mercaptopropyltrimethoxysilane (KBM-803 produced by Shin-Etsu Chemical Co., Ltd.)
- Sizing agent for alkyl group introduction: Propyltriethoxysilane (produced by Tokyo Chemical Industry Co., Ltd.)

(Reinforcing fiber)

- Long fiber glass: Glass fiber was produced through attachment of 0.50 mass% of a sizing agent relative to 100 mass% of glass fiber having a monofilament count of 2,000 and a fiber length of 10 mm or more with a single fiber fineness of 6.4 dtex. The winding configuration was DWR, and the average monofilament diameter was approximately 18 μm. The obtained glass fiber was cut to a fiber length of 10 mm to obtain long fiber glass.
- Glass cloth: Glass fiber was produced through attachment of 0.50 mass% of a sizing agent relative to 100 mass% of glass fiber having a monofilament count of 2,000 and a fiber length of 10 mm or more with a single fiber fineness of 6.4 dtex. The winding configuration was DWR, and the average monofilament diameter was approximately 18 μm. The glass fiber was woven as warp and weft to produce glass cloth (GF). The weaving configuration of the obtained glass cloth was plain weave with a weave density of 6.1 strands/25 mm and a basis weight of 640 $g/m^2$.

(Additive)

- Antioxidant (Irganox 1098 produced by BASF Japan Ltd.)

(Production of reinforced composite material)

• Reinforced composite material containing resin 1 (dynamic covalent bond: vinylogous urethane (VU) bond)

Ethylene glycol (diol-type; produced by FUJIFILM Wako Pure Chemical Corporation; 18.6 g; 0.3 mol) and tert-butyl acetoacetate (produced by Tokyo Chemical Industry Co., Ltd.; 100 g; 0.632 mol) were charged to a 300 mL four-necked flask and were stirred by a stirring blade under Ar flow. Thereafter, heating was performed in an oil bath until the external temperature reached 130°C, and the system was gradually depressurized to 68 hPa. After 4 hours of heating under reduced pressure, the external temperature was set to 130°C and the degree of depressurization was set to 3 hPa so as to remove unreacted tert-butyl acetoacetate. After a further 2 hours of heating under reduced pressure, the flask was left to cool to room temperature, and then a resin ethylene glycol acetoacetic acid diester (EGAA) inside the flask was recovered (recovered amount: 66.3 g; yield: 96%).

The obtained EGAA (46.8 g), tris(2-aminoethyl)amine (TREN; produced by Tokyo Chemical Industry Co., Ltd.; 12.5 g), hexamethylenediamine (HMDA; produced by Tokyo Chemical Industry Co., Ltd.; 9.9 g), and the additive (3.4 g) were added to and stirred with ethanol (97.6 mL). The resultant solution was used to impregnate four pieces of glass cloth that had been cut to a size of 210 mm × 210 mm. After air drying overnight, vacuum drying was performed at 80°C for 2 hours and at 160°C for 4 hours in a vacuum dryer. Thereafter, the impregnated glass cloth was cut to a size of 90 mm × 60 mm, and then 5 pieces were overlapped with one another and were pressed for 25 minutes by heat pressing (temperature setting: 160°C; pressure setting: 3 MPa) to obtain a continuous glass fiber-reinforced composite material having a thickness of 2 mm.

Note that in Example B7, 51 g of a pulverized product of a resin composition containing the resin 1 (dynamic covalent bond: VU bond) and the additive was uniformly mixed with 92 g of the long fiber glass and was then pressed for 25 minutes by heat pressing (temperature setting: 160°C; pressure setting: 3 MPa) in a metal mold of 200 mm × 200 mm to obtain a glass fiber-reinforced composite material having a thickness of 2 mm.

• Reinforced composite material containing resin 2 (dynamic covalent bond: ester bond)

A 100 mL round-bottomed flask was charged with 42.5 g of Pripol 1040 (75 mass% trimer acid and 25 mass% dimer acid; produced by Croda; 296 g/mol COOH) and 10 mol% of zinc acetate dihydrate ($Zn(Ac)_2 \cdot 2H_2O$) (produced by FUJIFILM Wako Pure Chemical Corporation) relative to COOH groups. These materials were gradually heated from 100°C to 180°C under vacuum. The materials were left at 180°C under vacuum for approximately 3 hours until gas evolution had stopped to yield a mixture. The obtained mixture, 25 g of bisphenol A diglycidyl ether (produced by FUJIFILM Wako Pure Chemical Corporation; 174 g/mol epoxy), 98.0 mL of butyl acetate (produced by FUJIFILM Wako Pure Chemical Corporation), and 3.4 g of the additive were charged to a PTFE beaker, were stirred under heating at 100°C until mixing thereof occurred, and were subsequently used to impregnate four pieces of glass cloth that had been cut to a size of 210 mm × 210 mm. After air drying overnight, vacuum drying was performed at 80°C for 2 hours and at 160°C for 4 hours in a vacuum dryer. Thereafter, the impregnated glass cloth was cut to a size of 90 mm × 60 mm, and 5 pieces were overlapped with one another and were pressed for 25 minutes by heat pressing (temperature setting: 160°C; pressure setting: 5 MPa) to obtain a continuous glass fiber-reinforced composite material having a thickness of 2 mm.

• Reinforced composite material containing resin 3 (dynamic covalent bond: imine bond)

In a PTFE beaker, 36.2 g of terephthalaldehyde (produced by Tokyo Chemical Industry Co., Ltd.), 8.4 g of diethylenetriamine (produced by Tokyo Chemical Industry Co., Ltd.), 18.4 g of tris(2-aminoethyl)amine (produced by Tokyo Chemical Industry Co., Ltd.), and 3.1 g of the additive were dissolved in 98.0 mL of ethanol under stirring, and then the resultant solution was used to impregnate four pieces of glass cloth that had been cut to a size of 210 mm × 210 mm. After air drying overnight, vacuum drying was performed at 80°C for 2 hours and at 160°C for 4 hours in a vacuum dryer. Thereafter, the impregnated glass cloth was cut to a size of 90 mm × 60 mm, and then 5 pieces were overlapped with one another and were pressed for 25 minutes by heat pressing (temperature setting: 160°C; pressure setting: 5 MPa) to obtain a continuous glass fiber-reinforced composite material having a thickness of 2 mm.

• Reinforced composite material containing resin 4 (dynamic covalent bond: carbonate bond)

A 2,000 mL three-necked round-bottomed flask that had been thermally dried was charged with 30 g of di(trimethylolpropane) (produced by Tokyo Chemical Industry Co., Ltd.) and 750 mL of tetrahydrofuran (THF) (produced by FUJIFILM Wako Pure Chemical Corporation) in a nitrogen atmosphere. Next, 66.6 g of ethyl chloroformate (produced by Tokyo Chemical Industry Co., Ltd.) was added under stirring using a syringe. The reaction mixture was cooled to 0°C, and 73.8 g of triethylamine (produced by FUJIFILM Wako Pure Chemical Corporation) was added dropwise to form a white sediment. The reaction mixture was heated to room temperature and was stirred for 3 hours. The white sediment was separated by vacuum filtration, and then solvent was removed under reduced pressure to yield a white solid. The white

solid was recrystallized from 25 mL of THF to yield a bis(six-membered cyclic carbonate) (bCC) (recovered amount: 27.6 g; yield: 76%).

Next, a vial that had been thermally dried was subjected to $N_2$ purging at 45°C and was charged with 15.9 g of 1,4-butanediol (produced by Wako Pure Chemical Industries, Ltd.), 40 mL of anhydrous dichloromethane (produced by FUJIFILM Wako Pure Chemical Corporation), and 3.5 g of the additive. Thereafter, 1.0 g of titanium(IV) isopropoxide (produced by Wako Pure Chemical Industries, Ltd.) was added using a Hamilton syringe. In a separate vial that had been thermally dried, 54.0 g of bCC was dissolved in 50 mL of anhydrous dichloromethane at 45°C. The bCC solution was added into the vial containing 1,4-butanediol using a syringe and was subjected to 30 seconds of sonication to cause homogenization. Next, the resultant solution was used to impregnate four pieces of glass cloth that had been cut to a size of 210 mm × 210 mm. After air drying overnight, vacuum drying was performed at 80°C for 2 hours and at 160°C for 4 hours in a vacuum dryer. Thereafter, the impregnated glass cloth was cut to a size of 90 mm × 60 mm, and then 5 pieces were overlapped with one another and were pressed for 25 minutes by heat pressing (temperature setting: 160°C; pressure setting: 5 MPa) to obtain a continuous glass fiber-reinforced composite material having a thickness of 2 mm.

• Reinforced composite material containing resin 5 (dynamic covalent bond: cyclic acetal bond)

In a PTFE beaker, 50.5 g of 1,6-hexanedithiol (HDT; produced by Sigma-Aldrich), 57.1 g of 3,9-divinyl-2,4,8,10-tetraoxaspiro[5.5]undecane (DVTU; produced by Sigma-Aldrich), 7.3 g of 1,2,4-trivinylcyclohexane (TVC; produced by Sigma-Aldrich), and 3.2 g of the additive were completely mixed at 50°C for 10 minutes. 2,2-Dimethoxy-2-phenylacetophenone (DMPA; produced by Sigma-Aldrich) was added as a polymerization initiator such as to be 0.1 mass% relative to the total mass of monomer. Next, the resultant solution was used to impregnate four pieces of glass cloth that had been cut to a size of 210 mm × 210 mm. After drying overnight, UV curing (365 mm, 200 W, 10 minutes) was performed, and then vacuum drying was performed at 80°C for 2 hours and at 160°C for 4 hours in a vacuum dryer. Thereafter, the impregnated glass cloth was cut to a size of 90 mm × 60 mm, and then 5 pieces were overlapped with one another and were pressed for 25 minutes by heat pressing (temperature setting: 160°C; pressure setting: 5 MPa) to obtain a continuous glass fiber-reinforced composite material having a thickness of 2 mm.

(Decomposition solution)

Ethylenediamine: Produced by FUJIFILM Wako Pure Chemical Corporation
Ethylene glycol: Produced by FUJIFILM Wako Pure Chemical Corporation
Benzylamine: Produced by Tokyo Chemical Industry Co., Ltd.
N-Methylpyrrolidone (NMP): Produced by Tokyo Chemical Industry Co., Ltd.
1,5,7-Triazabicyclo[4.4.0]dec-5-ene (TBD): Produced by Tokyo Chemical Industry Co., Ltd.
Hydrochloric acid: Produced by FUJIFILM Wako Pure Chemical Corporation

[Example B1]

(Decomposition of reinforced composite material)

In a decomposition solution (0.1 mol/L ethylenediamine solution) obtained by mixing ethylenediamine and N-methylpyrrolidone, 1 g of the reinforced composite material containing the resin 1 (dynamic covalent bond: VU bond) obtained by the above-described method was immersed and was stirred under heating at 80°C for a specific time. The resultant solution was filtered using filter paper for a Kiriyama funnel so as to trap reinforcing fiber. The trapped reinforcing fiber was dried at 100°C to remove attached decomposition solution.

It was possible to recover glass fiber with a recovery rate of 95% without visual confirmation of attachment of additive matter (residue of an additive or the like that was contained in the resin composition) in the glass fiber after decomposition treatment.

[Examples B2 to B9]

(Decomposition of reinforced composite material)

Decomposition of a reinforced composite material was performed in the same way as in Example B1 with the exception that the decomposition solution was changed in accordance with the type of resin (type of dynamic covalent bond of the resin) as indicated in Table 8.

The recovery rate (%) of fiber is shown in Table 7. Note that in Example B5, the recovery rate was determined excluding fibers that were attached to one another with additive matter remaining on the surfaces of the fibers.

[Example B10]

(Synthesis of resin and production of reinforced composite material)

Epon Resin 828 (polycondensate of 4,4'-isopropylidene diphenol and 1-chloro-2,3-epoxypropane; produced by FUJIFILM Wako Pure Chemical Corporation; 35.6 g), methylcyclohexene-1,2-dicarboxylic anhydride (produced by Tokyo Chemical Industry Co., Ltd.; 31.7 g), and 2,4,6-tris(dimethylaminomethyl)phenol (produced by Tokyo Chemical Industry Co., Ltd.; 0.14 g) were uniformly poured onto one piece of glass cloth (surface functional group: amino group) that had been cut to a size of 210 mm × 210 mm and had been preheated to 50°C in an oven, and a pressing roller was used to cause uniform pressing and impregnation. Thereafter, the resin-impregnated glass cloth was cut to a size of 90 mm × 60 mm, and then 5 pieces were overlapped with one another and were pressed for 25 minutes by heat pressing (temperature setting: 160°C; pressure setting: 5 MPa) to obtain a continuous glass fiber-reinforced composite material having a thickness of 2 mm.

(Decomposition of reinforced composite material)

In a decomposition solution (0.1 mol/L ethylene glycol solution) obtained by mixing ethylene glycol, 0.01 M 1,5,7-triazabicyclo[4.4.0]dec-5-ene, and N-methylpyrrolidone, 1 g of the continuous glass fiber-reinforced composite material obtained by the above-described method was immersed and was stirred under heating at 100°C for 10 minutes. The resultant solution was filtered using filter paper for a Kiriyama funnel so as to trap reinforcing fiber. The trapped reinforcing fiber was dried at 100°C to remove attached decomposition solution.

It was possible to recover glass fiber with a recovery rate of 95% without visual confirmation of attachment of additive matter (residue of an additive or the like that was contained in the resin composition) in the glass fiber after decomposition treatment.

[Comparative Example B1]

(Synthesis of resin and production of reinforced composite material)

Polypropylene glycol #400 diglycidyl ether (EPOLIGHT 400P produced by Kyoeisha Chemical Co., Ltd.; 11 g) was dissolved in 10 mL of methanol and was heated to 65°C to cause dissolution. A solution obtained by dissolving 6.0 g of JEFFAMINE T-403 (produced by Huntsman Corporation) in 5 mL of methanol was added to and stirred with this solution to yield an epoxy resin.

The obtained resin was uniformly poured onto glass cloth (surface functional group: amino group) that had been cut to a size of 210 mm × 210 mm and had been preheated to 50°C in an oven. A pressing roller was used to perform uniform pressing and impregnation. The resin-impregnated glass cloth was heated at 60°C for 30 minutes, and was then heated at 90°C for 30 minutes and at 170°C under reduced pressure for 1 hour. Thereafter, the resin-impregnated glass cloth was cut to a size of 90 mm × 60 mm, and then 5 pieces were overlapped with one another and were pressed for 25 minutes by heat pressing (temperature setting: 160°C; pressure setting: 5 MPa) to obtain a glass fiber-reinforced composite material having a thickness of 2 mm.

(Decomposition of reinforced composite material)

In a decomposition solution obtained through mixing of 8 g of benzylamine and 65 mL of N-methylpyrrolidone, 1 g of the glass fiber-reinforced composite material obtained by the above-described method was immersed and was stirred under heating at 100°C for 10 minutes.

It was not possible to decompose and remove the resin or to recover glass fiber.

[Comparative Example B2]

(Decomposition of reinforced composite material)

In a decomposition solution obtained by mixing 8 g of benzylamine and 65 mL of N-methylpyrrolidone, 1 g of the glass fiber-reinforced composite material obtained in Comparative Example B1 was immersed and was stirred under heating at 100°C for 10 minutes.

It was not possible to decompose and remove the resin or to recover glass fiber.

Next, 1 g of the glass fiber-reinforced composite material obtained by the above-described method was loaded into a crucible and was heated at 650°C in an electric furnace for 4 hours to perform resin decomposition through heat. Combustion proceeded as far as the sizing agent at the fiber surface, handleability deteriorated due to fluffing of fibers, and some fibers could not be recovered, resulting in a low recovery rate of 45%.

[Table 7]

| | | Example B1 | Example B2 | Example B3 | Example B4 | Example B5 | Example B6 | Example B7 | Example B8 | Example B9 | Example B10 | Comparative Example B1 | Comparative Example B2 |
|---|---|---|---|---|---|---|---|---|---|---|---|---|---|
| Dynamic covalent bond of resin | - | VU | Ester | Imine | Carbonate | Cyclic acetal | VU | VU | VU | VU | Ester | (Epoxy) | (Epoxy) |
| Fiber | - | Glass cloth | Glass cloth | Glass cloth | Glass cloth | Glass cloth | Glass cloth | Long fiber | Glass cloth | Glass cloth | Glass cloth | Glass cloth | Glass cloth |
| Fiber length | mm | ≥10 | ≥10 | ≥10 | ≥10 | ≥10 | ≥10 | 10 | ≥10 | ≥10 | ≥10 | ≥10 | ≥10 |
| Fiber surface functional group | - | Amino group | Amino group | Amino group | Amino group | Amino group | Hydroxy group | Amino group | Alkyl group | Amino group | Amino group | Amino group | Amino group |
| Additive | Mass% | 2 | 2 | 2 | 2 | 2 | 2 | 2 | 2 | 5 | 2 | 2 | 2 |
| Bending strength | MPa | 649 | 712 | 400 | 655 | 590 | 678 | 576 | 638 | 626 | 812 | 645 | 645 |
| Resin decomposition time through solvent | hr | 3.5 | 24 | 2.5 | 36 | 8 | 3.5 | 3.5 | 20 | 3.5 | 24 | Decomposition not possible | Decomposition not possible |
| Resin decomposition through heat | - | - | - | - | - | - | - | - | - | - | - | - | Possible |
| Recovery rate of fiber | % | 95 | 95 | 95 | 95 | 95 | 90 | 85 | 95 | 70 | 95 | 0 | 45 |

Note that judgment of surface functional groups was performed in accordance with the method previously described in <Surface functional groups of carbon fiber and glass fiber>.

[Table 8]

| Dynamic covalent bond of resin | Decomposition solution | | Heating temperature |
|---|---|---|---|
| | Additive matter | Solvent | |
| VU | Ethylene diamine (0.1 mol/L) | NMP | 80°C |
| Ester (Example B2) | Ethylene glycol (0.1 mol/L) | NMP | 80°C |
| Ester (Example B10) | Ethylene glycol (0.1 mol/L) | 0.01 M TBD/NMP | 80°C |
| Imine | Ethylene diamine (0.1 mol/L) | NMP | 80°C |
| Carbonate | 1 M Hydrochloric acid aqueous solution | | 80°C |
| Cyclic acetal | Ethylene glycol (0.1 mol/L) | NMP | 80°C |

INDUSTRIAL APPLICABILITY

The resin composition of the present embodiment enables the provision of a reinforced composite material that has adequate mechanical characteristics, heat resistance characteristics, and chemical resistance characteristics while also being recyclable, and thus has industrial applicability.

## Claims

1. A resin composition comprising a resin that includes a monomer unit derived from (A) an acetoacetic acid ester compound including two or more acetoacetic acid ester groups in a molecule and a monomer unit derived from (B) an amine compound including two or more primary amino groups in a molecule, and that has a three-dimensional crosslinked structure in which an acetoacetic acid ester group of the (A) acetoacetic acid ester compound and a primary amino group of the (B) amine compound are condensation bonded.

2. The resin composition according to claim 1, wherein a difference (Tv - Tg) between a bond exchange temperature (Tv) and a glass-transition temperature (Tg) is 10°C or more.

3. The resin composition according to claim 1, wherein the (A) acetoacetic acid ester compound includes a bisacetoacetic acid ester compound, and the (B) amine compound includes an amine compound including three or more primary amino groups in a molecule.

4. The resin composition according to claim 1, wherein the (A) acetoacetic acid ester compound includes an acetoacetic acid ester compound including three or more acetoacetic acid ester groups in a molecule.

5. The resin composition according to claim 1, wherein crosslink density is 200 mol/$m^3$ to 2,000 mol/$m^3$.

6. The resin composition according to claim 3 or 5, wherein aromatic group content is less than 10 mass%.

7. A reinforced composite material comprising: the resin composition according to claim 1; and reinforcing fiber.

8. The reinforced composite material according to claim 7, wherein the reinforcing fiber has a fiber length of 10 mm or more.

9. The reinforced composite material according to claim 8, wherein the reinforcing fiber includes at least one type of sizing agent including an amino group.

10. The reinforced composite material according to claim 9, wherein the sizing agent includes one or more selected from the group consisting of a silane coupling agent, an epoxy resin compound, a polyamide resin compound, and a polyurethane resin compound.

**11.** The reinforced composite material according to claim 7, wherein 0.1 mass% to 5.0 mass% of an additive is contained in 100 mass% of the reinforced composite material.

**12.** The reinforced composite material according to claim 7, wherein the reinforcing fiber is glass fiber or carbon fiber.

**13.** The reinforced composite material according to claim 12, wherein the carbon fiber has a single fiber fineness of 0.2 dtex to 2.0 dtex.

**14.** The reinforced composite material according to claim 12, wherein the glass fiber has a single fiber fineness of 1.0 dtex to 10 dtex.

**15.** The reinforced composite material according to claim 12, wherein the reinforcing fiber is continuous reinforcing fiber.

**16.** A shaped product comprising the reinforced composite material according to claim 12.

**17.** A method of recovering reinforcing fiber from a reinforced composite material containing a resin composition that contains a resin including a dynamic covalent bond that reversibly dissociates and bonds through external stimulus and reinforcing fiber that has a fiber length of 10 mm or more, the method comprising:

immersing the reinforced composite material in a decomposition solution to cause decomposition of the resin; and recovering the reinforcing fiber from the decomposition solution after the decomposition.

**18.** The method according to claim 17, comprising processing the reinforced composite material by cutting and deformation prior to immersion of the reinforced composite material in the decomposition solution.

**INTERNATIONAL SEARCH REPORT**

International application No. **PCT/JP2023/030385**

**A. CLASSIFICATION OF SUBJECT MATTER**

***C08G 73/00***(2006.01)i; ***B29B 17/02***(2006.01)i; ***C08G 12/00***(2006.01)i; ***C08J 5/04***(2006.01)i; ***C08J 11/10***(2006.01)i; ***C08J 11/28***(2006.01)i; ***C08L 79/00***(2006.01)i
FI: C08G73/00; C08L79/00 Z; C08G12/00; C08J11/10; B29B17/02 ZAB; C08J11/28 CEZ; C08J5/04 CER

According to International Patent Classification (IPC) or to both national classification and IPC

**B. FIELDS SEARCHED**

Minimum documentation searched (classification system followed by classification symbols)

C08G73/00; B29B17/02; C08G12/00; C08J5/04; C08J11/10; C08J11/28; C08L79/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | MOHAJERI, Sara. The stability of enamine crosslinks formed from acetoacetate/amine in synthetic hydrogels. Polymer Degradation and Stability. 114, 13 October 2014, (accession date), 94-104, scheme 1<br>scheme 1 | 1-6 |
| A | | 7-18 |
| X | JP 2005-255835 A (HITACHI CHEMICAL CO LTD) 22 September 2005 (2005-09-22)<br>claims 1, 9, paragraphs [0002], [0006], [0035], [0039]-[0049], examples 1-8 | 17-18 |
| A | | 1-16 |
| X | JP 2008-106183 A (MATSUSHITA ELECTRIC WORKS LTD) 08 May 2008 (2008-05-08)<br>claim 1, paragraphs [0018], [0022], [0032], [0045]-[0049], example 1 | 17-18 |
| A | | 1-16 |
| A | JP 2018-177970 A (KOREA INST SCI & TECH) 15 November 2018 (2018-11-15)<br>paragraph [0097] | 1-18 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 November 2023** | **14 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/030385

C. DOCUMENTS CONSIDERED TO BE RELEVANT

| Category* | Citation of document, with indication, where appropriate, of the relevant passages | Relevant to claim No. |
|---|---|---|
| A | JP 2022-082861 A (TOYOTA MOTOR CORP) 03 June 2022 (2022-06-03) claims 1-2 | 1-18 |

Form PCT/ISA/210 (second sheet) (January 2015)

**INTERNATIONAL SEARCH REPORT**
**Information on patent family members**

International application No.
**PCT/JP2023/030385**

| Patent document cited in search report | Publication date (day/month/year) | Patent family member(s) | Publication date (day/month/year) |
|---|---|---|---|
| JP 2005-255835 A | 22 September 2005 | (Family: none) | |
| JP 2008-106183 A | 08 May 2008 | (Family: none) | |
| JP 2018-177970 A | 15 November 2018 | (Family: none) | |
| JP 2022-082861 A | 03 June 2022 | US 2022/0162072 A1<br>claims 1-2<br>CN 114539613 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6156569 B
- JP 6064564 B
- JP 2019026781 A
- JP 2019025842 A
- JP 2021080379 A
- JP 2017533088 A